(19) Europäisches Patentamt
European Patent Office
Office européen des brevets

(11) **EP 2 867 310 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(21) Anmeldenummer: **13728389.1**

(22) Anmeldetag: **12.06.2013**

(51) Int Cl.:
*C09C 1/30* (2006.01)          *B01J 20/10* (2006.01)
*B01J 20/22* (2006.01)          *B01J 20/28* (2006.01)
*B01J 20/30* (2006.01)          *B01J 20/32* (2006.01)
*C01B 33/18* (2006.01)          *C01B 32/05* (2017.01)

(86) Internationale Anmeldenummer:
**PCT/EP2013/062166**

(87) Internationale Veröffentlichungsnummer:
**WO 2014/001088 (03.01.2014 Gazette 2014/01)**

(54) **GRANULÄRE, FUNKTIONALISIERTE KIESELSÄURE, VERFAHREN ZU DEREN HERSTELLUNG UND DEREN VERWENDUNG**

GRANULAR FUNCTIONALIZED SILICA, PROCESS FOR PREPARATION THEREOF AND USE THEREOF

ACIDES SILICIQUES FONCTIONNALISÉS GRANULAIRES, PROCÉDÉ POUR LES PRÉPARER ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2012 DE 102012211121**

(43) Veröffentlichungstag der Anmeldung:
**06.05.2015 Patentblatt 2015/19**

(73) Patentinhaber: **Evonik Degussa GmbH**
**45128 Essen (DE)**

(72) Erfinder:
• **DREXEL, Claus-Peter**
**63263 Neu-Isenburg (DE)**
• **MEYER, Jürgen**
**63811 Stockstadt (DE)**
• **HEINDL, Frank**
**63517 Rodenbach (DE)**

(56) Entgegenhaltungen:
**EP-A1- 0 725 037          EP-A1- 1 700 824**
**WO-A1-2011/117100     DE-A1- 10 163 179**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft granuläre, funktionalisierte Kieselsäuren, deren Herstellung und deren Verwendung.

In vielen Anwendungsgebieten wie z.B. im Bereich der Erzeugnisse für den Pflanzenschutz, bei pharmazeutischen Wirkstoffen, bei der Herstellung von Futtermitteln und Futtermitteladditiven oder in der Lebensmittelindustrie werden Trägermaterialien eingesetzt um z.B. flüssige oder harzförmige Wirkstoffe in eine fließfähige und lagerstabile Form zu überführen. Dies ist zum Beispiel in WO 2011/117100 beschrieben.

Eine wesentliche Anforderung an das Trägermaterial ist eine hinreichend hohe Saugfähigkeit, so dass möglichst wenig Trägermaterial eingesetzt werden muss. Daher beschäftigen sich eine Reihe von Veröffentlichungen, wie z.B. die DE 102006002765, mit Verfahren zur Steigerung des Gehalts an absorbiertem Material auf dem Trägermaterial. Diese Verfahren sind jedoch sehr aufwendig durchzuführen und haben sich bislang nicht großtechnisch durchgesetzt.

Eine weitere Anforderung an das Trägermaterial ist, dass die Absorbate eine gute Fließfähigkeit und somit gute Verarbeitbarkeit aufweisen. Ferner sollen die Kieselsäuren beim Transport, Umfüllen und der Herstellung der Absorbate möglichst wenig stauben. Zur Verbesserung der Fließfähigkeit wird daher, z.B. in der EP 0984772 A1 und der EP 0966207 A1, vorgeschlagen mikrogranuläre Kieselsäuren mit in etwa sphärischer Form und mit einer mittleren Partikelgröße von über 150 $\mu$m als Trägermaterial zu verwenden. Die auf diese Weise erhaltenen Absorbate weisen zwar eine verbesserte Fließfähigkeit auf, die Verarbeitungseigenschaften der Kieselsäuren sind jedoch nicht optimal.

Aus DE 10163179 A1, EP 1700824 A1 und EP 0725037 A1 sind granulären Kieselsäuren, deren Oberfläche zur Erhöhung der Affinität mittels zum Beispiel Organosilanen modifiziert sind, bekannt.

Im Bereich der Festbettkatalyse kommen weitere Anforderungen an das Trägermaterial hinzu. So muss z.B. sichergestellt werden, dass es bei Reaktionen in Festbettreaktoren, bei denen die Reaktanden einen mit beladenen Trägermaterialien, auf denen ein Katalysator aufgebracht ist, gefüllten Reaktionsraum durchströmen, zu möglichst geringen Druckverluste im Reaktionsraum kommt. Bei Reaktionen, bei denen ein mit Katalysator beladenes Trägermaterial in einem Reaktionsmedium suspendiert wird, muss das Trägermaterial am Ende der Reaktion leicht wieder abgetrennt werden können. Schließlich fordern Reaktionen in einem Fließbettreaktor, dass die beladenen Trägermaterialien dort gut fluidisiert werden können. Es ist somit offensichtlich, dass unterschiedliche Reaktortypen ganz unterschiedliche Anforderungen an die beladenen Träger und somit auch an das Trägermaterial stellen. Um diese Anforderungen zu erfüllen werden in der WO 2011/117100 granuläre Kieselsäuren beschrieben mit einem Hg-Porenvolumen (< 4 $\mu$m) von mehr als 0,90 ml/g, einem $d_{Q3=10\%}$-Wert von mehr als 400 $\mu$m bei gleichzeitig einem $d_{Q3=90\%}$-Wert von weniger als 3000 $\mu$m und einem Verhältnis des $d_{50}$-Werts ohne Ultraschalleinwirkung zu $d_{50}$-Wert nach 3 min

Ultraschalleinwirkung vor < 4,00, wobei die Messung an einer Fraktion von Partikeln von 400 bis 500 $\mu$m erfolgt. Diese Kieselsäuren haben jedoch den Nachteil, dass einige katalytisch aktive Komponenten wie z.B. Enzyme oder Biokatalysatoren nur unzureichend auf der Kieselsäureoberfläche gebunden und zu rasch wieder desorbiert werden.

Aus EP 1357156 A2 sind silanmodifizierte oxidische oder silikatische Füllstoffe mit einer Perlfraktion kleiner als 75 $\mu$m von weniger als 15 Ges.-% und einem Medianwert der Partikelgrösse zwischen 130 und 500 $\mu$m bekannt. Ferner sind aus US 20060084746 hydrophobe anorganische Oxide ausgewählt aus der Gruppe bestehend aus amorpher gefällter Kieselsäuren, Aluminiumoxid und Mischungen von solchen anorganischen Oxiden, bekannt, wobei der Hydroxylgehalt 2-15 OH/nm$^2$, der Kohlenstoffgehalt 0,1 bis 6 Gew.-%, die Methanolbenetzbarkeit 15 bis 45 % und das M1 Standard White Area weniger als 0,4 % ist.

Aufgabe der vorliegenden Erfindung ist es, Kieselsäuren zur Verfügung zu stellen, welche ein verbessertes Desorptionsverhalten, beispielsweise von Enzymen, aufweisen.

Gegenstand der Erfindung ist eine granuläre, funktionalisierte Kieselsäuren, welche dadurch gekennzeichnet ist, dass

- das Hg-Porenvolumen (< 4 $\mu$m) mehr als 0,80 ml/g, bevorzugt von mehr als 0,85 ml/g, besonders bevorzugt mehr als 0,90 ml/g, ganz besonders bevorzugt mehr als 0,95 ml/g, speziell bevorzugt mehr als 1,00 ml/g,
- der $d_{Q3=10\%}$-Wert mehr als 400 $\mu$m,
- der $d_{Q3=90\%}$-Wert weniger als 3000 $\mu$m,
- das Verhältnis des $d_{50}$-Werts ohne Ultraschalleinwirkung zu $d_{50}$-Wert nach 3 min Ultraschalleinwirkung kleiner 4,00, bevorzugt kleiner 3,00, besonders bevorzugt kleiner 2,60, ganz besonders bevorzugt kleiner 2,10 und speziell bevorzugt kleiner 1,60, wobei die Messung an einer Fraktion von Partikeln von 400 bis 500 $\mu$m mit dem Laserbeugungsgerät LS 230 der Firma Beckman Coulter, Messbereich 0.04-2000 $\mu$m und Flüssigkeitsmodul Small Volume Module Plus, 120 ml der Firma Beckman Coulter mit integriertem Ultraschall-Finger, Ultraschallprozessor Vibra Cell VCX 130 der Firma Sonics mit Ultraschallkonverter CV 181 und 6 mm Ultraschallspitze bei 100 % Amplitude in einem Ethanol/Wassergemisch, Volumenverhältnis 1:1 erfolgt, und
- der C-Gehalt 1,0-15,0 Ges.-%, vorzugsweise 2,0-14,0 Gew.-%, besonders bevorzugt 3,0-12,0 Gew.-%, ist und diese die funktionellen Gruppen Si(CH$_2$)$_m$-R', (R'')$_x$Si(CH$_2$)$_m$-R', Si(CH$_2$)$_m$-R' oder (R'')$_x$Si(CH$_2$)$_m$-R', mit

m = 0, 1 - 20,

R' = $-NH_2$, $-NH-CH_2-CH_2-NH_2$, $-N-(CH_2-CH_2-NH_2)_2$, $-NH-CO-N-CO-(CH_2)_5$, $-NH-COO-CH_3$, $-NH-COO-CH_2-CH_3$, $-NH-(CH_2)_3Si(OR)_3$, $-NH-(CH_2)_3-CH_3$ oder $-NH-CH_2-CH_2-NH-CH_2-CH_2-NH_2$,

R'' = Alkyl, Cycloalkyl,

x =1 oder 2,

enthält.

Die erfindungsgemäßen granulären, funktionalisierten Kieselsäuren können einen pH-Wert von 5,0 bis 11,0 haben.

Eine hinreichend hohe Porosität stellt sicher, dass die erfindungsgemäßen granulären, funktionalisierten Kieselsäuren ein ausreichendes Porenvolumen im Bereich der Meso- und/oder Makroporen besitzt und somit das Enzym gut für die Reaktanden zugänglich ist und gleichzeitig möglichst wenig Trägermaterial zur Herstellung der erfindungsgemäßen Formulierungen benötigt wird.

Weiterhin bevorzugte erfindungsgemäße granuläre, funktionalisierte Kieselsäure weisen ein Hg-Porenvolumen (< 4 $\mu$m) von 0,81 bis 1,50 ml/g, besonders bevorzugt von 0,81 ml/g bis 1,40 ml/g, ganz besonders bevorzugt von 0,81 ml/g bis 1,30 ml/g, auf.

Eine weitere wesentliche Eigenschaft der erfindungsgemäßen granulären, funktionalisierten Kieselsäuren ist ihre Härte. Ist die Porosität hoch, so kann es vorkommen, dass die mechanische Stabilität nicht mehr gewährleistet wird und es zu einer erhöhten Bildung von Feinanteil bei mechanischer Belastung der Kieselsäure bzw. der damit hergestellten Formulierungen, kommen kann. Die mechanischen Belastungen bei der Verpackung und dem Transport der Kieselsäure, bei der Herstellung der Formulierungen sowie bei der Verwendung der beladenen Trägermaterialien werden simuliert durch Einwirkung von Ultraschallwellen auf die in Wasser suspendierte Kieselsäure für 3 min. Das Verhältnis von $d_{50}$-Wert ohne Ultraschalleinwirkung zu $d_{50}$-Wert nach 3 min Ultraschalleinwirkung gibt Auskunft darüber, um wie viel sich der $d_{50}$-Wert durch die mechanische Belastung verringert hat. Je härter die Kieselsäuren ist, desto geringer ist die Differenz zwischen $d_{50U}$-Wert nach Ultraschalleinwirkung und $d_{50}$-Wert ohne Ultraschalleinwirkung, d.h. im Idealfall wäre das Verhältnis von $d_{50}$-Wert ohne Ultraschalleinwirkung zu $d_{50U}$-Wert nach 3 min Ultraschalleinwirkung gleich 1,00. Die erfindungsgemäßen granulären, funktionalisierten Kieselsäuren weisen trotz ihrer großen mittleren Partikelgröße eine sehr gute Härte auf.

Das Verhältnis von $d_{50U}$-Nert ohne Ultraschalleinwirkung zu $d_{50}$-Wert nach 3 min Ultraschalleinwirkung kann vorzugsweise 1,00 bis 3,00, besonders bevorzugt 1,00 bis 2,60, ganz besonders bevorzugt 1,00 bis 2,10, speziell bevorzugt 1,00 bis 1,60, sein. Die Messung erfolgt dabei an einer Fraktion von Partikeln von 400 $\mu$m - 500 $\mu$m mit dem Laserbeugungsgerät LS 230 der Firma Beckman Coulter, Messbereich 0.04-2000 $\mu$m und Flüssigkeitsmodul Small Volume Module Plus, 120 ml der Firma Beckman Coulter mit integriertem Ultraschall-Finger, Ultraschallprozessor Vibra Cell VCX 130 der Firma Sonics mit Ultraschallkonverter CV 181 und 6 mm Ultraschallspitze bei 100 % Amplitude in einem Ethanol/Wassergemisch, Volumenverhältnis 1:1.

Die Partikelgrößenverteilung - charakterisiert durch den $d_{Q3=10\%}$-Wert und den $d_{Q3=90\%}$-Wert - ist wichtig um gute Strömungseigenschaften in Festbettreaktoren bzw. um gute Fluidisierungseigenschaften in Wirbelbettreaktoren sicher zu stellen. Zu große Partikel weisen nicht genügend spezifische Oberfläche für die Reaktion, Lösung und Diffusion auf. Zu kleine Partikel wiederum erhöhen den Strömungswiderstand. Die erfindungsgemäßen granulären, funktionalisierten Kieselsäuren weisen daher einen $d_{Q3=10\%}$-Wert > 400 $\mu$m und $d_{Q3=90\%}$-Wert < 3000 $\mu$m auf.

Die erfindungsgemäßen granulären, funktionalisierten Kieselsäuren können bevorzugt einen C-Gehalt von 1,0-9,0, vorzugsweise 1,0-7,5 besonders bevorzugt 2,0-7,5, aufweisen.

Die funktionellen Gruppen können über Si-O-Si -Bindungen mit der Kieselsäure verbunden sein:

$(-O-)_3Si[(CH_2)_m-R']$, $(-O-)_{(3-x)}(R'')_xSi[(CH_2)_m-R']$, $(-O-)_3Si[(CH_2)_m-R']$ oder $(-O-)_{3-x}(R'')_xSi[(CH_2)_m-R']$.

Die granuläre, funktionalisierte Kieselsäure kann eine pyrogene oder gefällte Kieselsäure sein.

Ein weiterer Gegenstand der Erfindung ist ein erstes Verfahren zur Herstellung der erfindungsgemäßen granulären Kieselsäuren umfassend die Schritte

a) Bereitstellen einer gefällten oder pyrogenen Kieselsäure mit einer mittleren Partikelgröße $d_{50}$ ohne Ultraschallbehandlung von 0,1 bis 350 $\mu$m, vorzugsweise einer BET-Oberfläche von 30 bis 800 m²/g und vorzugsweise einer DBP-Zahl von 140 bis 400 g/100g,

b) Befeuchtung der Kieselsäure aus Schritt a) auf einen Trocknungsverlust von 30-80 Ges.-%,

c) Formgebung der Kieselsäuren aus Schritt b) durch Extrusion, Granulation, Kompaktierung oder Tablettierung,

d) Trocknung der Kieselsäureformkörper in einem Trocknungsaggregat,

e) Siebgranulation oder Siebung der Granulate bei einer Siebgröße von 3000 $\mu$m und Absiebung des Feinanteils mit einer Siebmaschenweite von 400 $\mu$m, und

f) Umsetzung der Granulate aus Schritt e) mit einem Oberflächenmodifizierungsmittel,

wobei als Oberflächenmodifizierungsmittel mindestens eines der folgenden Organosilane oder Gemische der Organosilane eingesetzt werdena) Organosilane der Formel $(RO)_3Si(CH_2)_m$-R', b) Organosilane der Formel $(R'')_x(RO)_{(3-x)}Si(CH_2)_m$-R', c)Halogenorganosilane der Formel $X_3Si(CH_2)_m$-R' oder d)Halogenorganosilane der Formel $(R'')_xX_{(3-x)}Si(CH_2)_m$-R',

mit

R = Alkyl, vorzugsweise Methyl-, Ethyl- oder Propyl-,

R' = $-NH_2$, $-NH-CH_2-CH_2-NH_2$, $-N-(CH_2-CH_2-NH_2)_2$, $-NH-CO-N-CO-(CH_2)_5$, $-NH-COO-CH_3$, $-NH-COO-CH_2-CH_3$, $-NH-(CH_2)_3Si(OR)_3$, $-NH-(CH_2)_3-CH_3$ oder $-NH-CH_2-CH_2-NH-CH_2-CH_2-NH_2$,

R'' = Alkyl, Cycloalkyl,

X = Cl oder Br,

x =1 oder 2,

m = 0, 1 - 20.

Die gefällte oder pyrogene Kieselsäuren aus Schritt a) kann getrocknet und ggf. vermahlen sein. Alternativ zu dem zuvor beschriebenen ersten erfindungsgemäßen Verfahren kann auch ein wasserhaltiger Filterkuchen mit einem Trocknungsverlust von 30-80 Ges.-% als Ausgangsmaterial für Schritt a) verwendet werden.

Ein weiterer Gegenstand der Erfindung ist ein zweites Verfahren zur Herstellung der erfindungsgemäßen granulären Kieselsäuren umfassend die Schritte

i) Bereitstellen einer gefällten oder pyrogenen Kieselsäuren mit einem Trocknungsverlust < 30 Gew.% und mit einer mittleren Partikelgröße $d_{50}$ ohne Ultraschallbehandlung von 0,1 bis 350 $\mu$m, vorzugsweise einer BET-Oberfläche von 30 bis 800 $m^2$/g und vorzugsweise einer DBP-Zahl von 140 bis 400 g/100g;

ii) Formgebung der Kieselsäuren aus Schritt i) durch Trockenkompaktierung, vorzugsweise zwischen zwei rotierenden Walzen, bei einem spezifischen Anpressdruck von 0,5 kN/cm Walzenbreite bis 12 kN/cm Walzenbreite zu Stülpen,

iii) Siebgranulation oder Siebung der Stülpen bei einer Siebgröße von 3000 $\mu$m und Absiebung des Feinanteils mit einer Siebmaschenweite von 400 $\mu$m, und

iv) Umsetzung der Granulate aus Schritt iii) mit einem Oberflächenmodifizierungsmittel,

wobei als Oberflächenmodifizierungsmittel mindestens eines der folgenden Organosilane oder Gemische der Organosilane eingesetzt werden

a)Organosilane der Formel $(RO)_3Si(CH_2)_m$-R',
b) Organosilane der Formel $(R'')_x(RO)_{(3-x)}Si(CH_2)_m$-R',
c)Halogenorganosilane der Formel $X_3Si(CH_2)_m$-R' oder
d)Halogenorganosilane der Formel $(R'')_xX_{(3-x)}Si(CH_2)_m$-R',

mit

R = Alkyl, vorzugsweise Methyl-, Ethyl- oder Propyl-,

R' = $-NH_2$, $-NH-CH_2-CH_2-NH_2$, $-N-(CH_2-CH_2-NH_2)_2$, $-NH-CO-N-CO-(CH_2)_5$, $-NH-COO-CH_3$, $-NH-COO-CH_2-CH_3$, $-NH-(CH_2)_3Si(OR)_3$, $-NH-(CH_2)_3-CH_3$ oder $-NH-CH_2-CH_2-NH-CH_2-CH_2-NH_2$,

R'' = Alkyl, Cycloalkyl,

X = Cl oder Br,

x =1 oder 2,

m = 0, 1 - 20.

Die gefällte oder pyrogene Kieselsäure aus Schritt i) kann getrocknet und ggf. vermahlen sein.

In allen oben beschriebenen erfindungsgemäßen Verfahren kann die Härte der Partikel weiter gesteigert werden, indem diese einer Behandlung mit Wasserdampf bei erhöhter Temperatur, wie beispielsweise 70°C bis 400°C, unterzogen werden. Im Anschluss kann eventuell ein weiterer Trocknungsschritt notwendig werden.

Weiterhin kann die Härte der Partikel gesteigert werden, indem diese für eine gewisse Zeit mit einer alkalischen Substanz in Kontakt gebracht werden, um den pH Wert der Partikel anzuheben. Das Verfahren ist in DE 102008035867 A1 beschrieben.

Weiterhin kann die Härte der Partikel gesteigert werden, indem die Partikel aus dem Verfahrensschritt e) oder iii) bei einer erhöhten Temperatur, vorzugsweise zwischen 700°C und 1200°C, für eine gewisse Zeit, vorzugsweise < 1 h, calciniert werden.

Die vorherbeschriebenen Verfahrensschritte zur Härtung der Partikel können vor oder nach dem Verfahrensschritt der Siebgranulation und Siebung durchgeführt werden.

Die Befeuchtung- (b) und/oder Granulierungsverfahrensschritte (c) aus dem ersten erfindungsgemäßen Verfahren können in einem schnell laufenden intensiven Mischer (Intensivmischer), Kneter, Kompaktor, Tellergranulator und/oder Lochmatritzenpresse oder ähnlichem durchgeführt werden. Alternativ kann sich nach der Befeuchtung eine Extrusion anschließen oder es kann ein wasserhaltiger Filterkuchen direkt extrudiert werden. Extrudierte Formkörper können anschließend durch weitere geeignete Verfahren in ihrer geometrischen Form verändern werden (z.B. Spheronizer der Firma Caleva).

Der Trocknungsverfahrensschritt (d) aus dem ersten erfindungsgemäßen Verfahren kann beispielsweise in Trockenschränken, Wirbelschichttrocknern, Bandtrocknern o.ä. durchgeführt werden. Wenn notwendig können die getrockneten Formkörper anschließend durch weitere Verfahren wie z.B. Siebung oder Siebgranulation bei einer Siebgröße von 3000 $\mu$m und Absiebung des Feinanteils mit einer Siebmaschenweite von 400 $\mu$m auf die entsprechende Partikelgrößenfraktion eingestellt werden.

Der Formgebungsschritt (ii) aus dem zweiten erfindungsgemäßen Verfahren wird vorzugsweise in einem Kompaktor, z.B. in einem Apparat der Firma Hosokawa Bepex GmbH wie Bepex L200/50 oder der Firma Alexanderwerk AG, durchgeführt.

Die Siebgranulation (e bzw. iii) aus beiden erfindungsgemäßen Verfahren kann bevorzugt in Apparaten wie einer Siebmühle der Firma Frewitt oder der Firma Hosokawa Bepex GmbH durchgeführt werden. Die Siebung kann mittels aller bekannten Techniken erfolgen, vorzugsweise mittels eines Schwingsiebs von Firmen wie Vibra, Engelsmann oder Allgeier. Es können mehrere Siebe oder mehrere Siebungsschritte durchgeführt werden.

Die Umsetzung der Granulate in Schritt f) bzw. iv) kann durchgeführt werden, indem man die Kieselsäuren gegebenenfalls zurächst mit Wasser und anschließend mit dem Oberflächenmodifizierungsmittel besprüht. Das eingesetzte Wasser kann mit einer Säure, zum Beispiel Salzsäure, bis zu einem pH-Wert von 7 bis 1 angesäuert sein oder das eingesetzte Wasser kann mit einer Lauge bis zu einem pH-Wert 7-14 alkalisch gestellt sein. Falls mehrere Oberflächenmodifizierungsmittel eingesetzt werden, können diese gemeinsam, aber getrennt, nacheinander oder als Gemisch aufgebracht werden. Die oder das Oberflächenmodifizierungsmittel können in geeigneten Lösungsmitteln gelöst sein. Nachdem das Sprühen beendet ist, kann noch 5 bis 30 min nachgemischt werden. Das Gemisch kann anschließend bei einer Temperatur von 20 bis 400 °C über einen Zeitraum von 0,1 bis 6 h thermisch behandelt werden. Die thermische Behandlung kann unter Schutzgas, wie zum Beispiel Stickstoff, erfolgen. Die Temperaturbehandlung kann auch mehrstufig bei unterschiedlichen Temperaturen erfolgen.
Die Aufbringung des oder der Oberflächenmodifizierungsmittel und die thermische Behandlung kann in einem geeigneten Aggregat oder getrennt in verschiedenen geeigneten Aggregaten erfolgen.
Die Aufbringung des oder der Oberflächenmodifizierungsmittel kann mit Einstoff-, Zweistoff-, oder Ultraschalldüsen erfolgen.
Die Oberflächenmodifizierung kann man in beheizbaren Mischern und Trocknern mit Sprüheinrichtungen kontinuierlich oder batchweise durchführen. Geeignete Vorrichtungen können zum Beispiel Pflugscharmischer, Teller-, Wirbelschicht- oder Fließbetttrockner sein. Bevorzugt können als Oberflächenmodifizierungsmittel Aminopropyltriethoxysilan, Aminopropyltrimethoxysilan, N-(2 Aminoethyl)-3-aminopropylmethyldimethoxysilan oder 3-Aminopropylmethyldiethoxysilan eingesetzt werden. Besonders bevorzugt können als Oberflächenmodifizierungsmittel Aminopropyltriethoxysilan oder Aminopropyltrimethoxysilan eingesetzt werden.

Für Trägeranwendungen ist eine Reihe von Kieselsäuren auf dem Markt, welche im erfindungsgemäßen Verfahren eingesetzt werden können. Beispiele hierfür sind die Kieselsäuren SIPERNAT® 50, SIPERNAT® 50S, SIPERNAT® 500LS, SIPERNAT® 22, SIPERNAT® 22S, SIPERNAT® 22 LS und SIPERNAT® 33 der Firma Evonik Industries. Diese Kieselsäuren sind - obwohl speziell für Trägeranwendungen entwickelt - selbst nicht geeignet oder nur unzureichend geeignet um als Trägermaterial eingesetzt zu werden. Ursache hierfür ist - speziell bei den sprühgetrockneten, düsenturmgetrockneten und/oder vermahlenen Partikeln - deren zu geringe Partikelgröße, welche wie zuvor geschildert zu einem unerwünschten Druckanstieg im Reaktor führen kann, und das Fehlen von funktionellen Gruppen zur chemischen oder physikalischen Anbindung. Durch dass erfindungsgemäße Verfahren wird eine Kompaktierung dieser Kieselsäuren vorgenommen, wobei die Partikelgröße und die Festigkeit der dadurch erzeugten Partikel durch das erfindungsgemäße Verfahren derart gesteuert wird, dass Partikel mit einer optimalen Korngrößenverteilung und Härte erhalten werden, welche einen geringen Strömungswiderstand im Reaktor aufweisen bzw. leicht aus Suspensionen abfiltrierbar sind.

Neben den bereits genannten Kieselsäuren können in Schritt a) des erfindungsgemäßen ersten Verfahrens beispielsweise die Kieselsäuren SIPERNAT® 2200, Aerosil® 200 der Firma Evonik Industries, Tixosil® 38 A bis X der Firma Rhodia Chemie, HiSil® SC 60 und HiSil® SC 72 der Firma PPG, Hubersil® 5170 der Firma Huber sowie die in den Europäische Patenten EP 0984772 A1, EP 0966207 A1 und EP 0937755 A1 offenbarten Kieselsäuren verwendet werden.

Die im erfindungsgemäßen Verfahren eingesetzten Kieselsäure können

1. eine mittlere Partikelgröße $d_{50}$ ohne Ultraschallbehandlung von 0,1 bis 350 $\mu$m, bevorzugt von 0,1 bis 200 $\mu$m,

besonders bevorzugt von 0,1 bis 150 μm und ganz besonders bevorzugt von 1 bis 50 μm,

2. eine BET-Oberfläche von 30 bis 800 m²/g, bevorzugt von 40 bis 700 m²/g, besonders bevorzugt von 50 bis 600 m²/g, ganz besonders bevorzugt von 150 bis 550 m²/g,

3. eine DBP-Zahl von 140 bis 400 g/(100g), bevorzugt von 140 bis 350 g/(100g), besonders bevorzugt von 190 bis 350 g/(100g), ganz besonders bevorzugt von 290 bis 350 g/(100g),

aufweisen.

Das erfindungsgemäße erste Verfahren wird vorzugsweise in einem Mischer, Kneter oder Kompaktor (optional mit nachgeschaltetem Extruder) und nachgeschaltetem Trockner, Siebgranulator und Sieb durchgeführt. Beispielsweise kann zurächst die vorgelegte Kieselsäuren, z.B. in einem Apparat der Firma Eirich GmbH, mit Flüssigkeit besetzt (sofern nicht Filterkuchen direkt zum Einsatz gelangt), anschließend verdichtet bzw. kompaktiert, danach extrudiert und getrocknet werden. Ebenfalls kann die mit Flüssigkeit benetzte und verdichtete bzw. kompaktierte Kieselsäure getrocknet, anschließend eine Siebgranulation durchgeführt und danach auf die gewünschte Kornfraktion gesiebt werden.

Die Härte der finalen Trägerpartikel kann durch das Maß der Verdichtung bzw. Kompaktierung der Ausgangskieselsäure gesteuert werden. Die Verdichtung kann in der Regel durch den Zusatz von Wasser bei gleichzeitigem Eintrag von Scherenergie erfolgen. Weiterhin können auch wässrige Lösungen wie Celluloselösungen oder Öle zugegeben werden, die geeignet sind, als Binder zwischen den Partikeln zu fungieren. Die Flüssigkeit kann, bezogen auf eine Dichte von 1,00 g/mL, vorzugsweise in Anteilen von 50 bis 90 Gew.-%, besonders bevorzugt in Anteilen von 60 bis 90 Ges.-% und ganz besonders bevorzugt in Anteilen von 65 bis 90 Ges.-%, zugegeben werden. Des Weiteren kann während der Kompaktierung ein Feststoff, der geeignet ist, als Binder zwischen den Partikeln zu fungieren, wie beispielsweise Cellulose, Wachse oder Polymere oder Monomere, welche anschließend polymerisiert werden, zugegeben werden. Der Feststoff kann in Anteilen von 0,1 bis 50 Gew.-%, bevorzugt in Anteilen von 0,5 bis 15 Ges.-%, besonders bevorzugt in Anteilen zwischen 0,5 und 8 Gew.-%, zugegeben werden.

In einer bevorzugten Ausführungsform können die Trägermaterialien ohne die Zuführung von Bindern verdichtet bzw. kompaktiert werden (Schritt c) bzw. ii))).

Die Kompaktierung kann vorzugsweise bei einer Temperatur von 10°C bis 90°C, besonders bevorzugt von 10°C bis 70°C, durchgeführt werden.

Die Formgebung im ersten erfindungsgemäßen Verfahren kann bevorzugt derart erfolgen, dass die Ausgangskieselsäure in der Mischeinheit unter Zuhilfenahme der zugesetzten Flüssigkeit solange intensiv verdichtet wird, bis es zum partiellen Flüssigkeitsaustritt kommt und die Granulation der Partikel einsetzt. Die so erhaltenen Granulate (Rohgranulate) können durch einen Extrusionsschritt in ihrer Partikelgröße vereinheitlicht und anschließend getrocknet werden. Des weiteren können die feuchten Rohgranulate, bei Weglassung des Extrusionsschritts, auch direkt getrocknet und beispielsweise durch ein Sieb mit einer charakteristischen Größe von 3000 μm passiert werden, wobei die Partikel, die größer als die charakteristische Siebgröße sind, zerkleinert werden. Das Passieren erfolgt bevorzugt in Apparaten wie einer Siebmühle der Firma Frewitt oder der Firma Hosokawa Bepex GmbH. Partikel, die größer als die charakteristische Größe des Passiersiebs sind, können beim Einsatz der erfindungsgemäßen Trägermaterialien im Bereich der Suspensionskatalyse zur unerwünschten Sedimentationen der Formulierungen führen und haben lange Diffusions bzw. Reaktionszeiten zur Folge. Weiterhin ist es vorteilhaft, wenn alle Siebfraktionen kleiner 400 μm abgetrennt werden. Diese kleinen Partikel wirken sich wie zuvor beschrieben negativ auf den Strömungswiderstand der Partikel aus und führen zu Druckverluste in Festbettreaktoren.

Die Siebung kann mittels aller bekannten Techniken erfolgen, vorzugsweise mittels eines Schwingsiebs von Firmen wie Vibra, Engelsmann oder Allgeier. Es können mehrere Siebe oder mehrere Siebungsschritte durchgeführt werden.

Im zweiten erfindungsgemäßen Verfahren wird die Kompaktierung der Kieselsäure vorzugsweise in einem Trockenkompaktor mit nachgeschaltetem Siebgranulator und Sieb durchgeführt. Die vorgelegte Kieselsäure kann, z.B. in einem Apparat der Firma Hosokawa Bepex GmbH wie Bepex L200/50 oder der Firma Alexanderwerk AG, kompaktiert und das kompaktierte Material auf die gewünschte Kornfraktion siebgranuliert und fraktioniert wird.

In Schritt ii) des zweiten erfindungsgemäßen Verfahrens wird die trockene Ausgangskieselsäure kompaktiert, d.h. zu Stülpen verpresst, welche eine für die erfindungsgemäße Anwendung optimierte Partikelgröße und Härte aufweist. Die Härte kann dabei durch den Druck mit dem die Ausgangskieselsäuren kompaktiert werden gesteuert werden. Die Kompaktierung erfolgt bevorzugt bei einem spezifischen Anpressdruck von 0,5 bis 15 kN/cm Walzenbreite, besonders bevorzugt von 3 bis 12 kN/cm Walzenbreite und ganz besonders bevorzugt von 6 bis 10 kN/cm Walzenbreite, und bei einer Temperatur von 10°C bis 90°C, besonders bevorzugt von 10°C bis 70°C. Weiterhin kann während der Kompaktierung eine Flüssigkeit, vorzugsweise Wasser, wässrige Lösungen wie Celluloselösungen oder Öle zugegeben werden, die geeignet sind als Binder zwischen den Partikeln zu fungieren. Die Flüssigkeit kann vorzugsweise in Anteilen von 1 bis 30 Gew.-%, besonders bevorzugt in Anteilen von 1 bis 20 Gew.-% und ganz besonders bevorzugt in Anteilen von 3 bis 15 Gew.-%, zugegeben werden. Des Weiteren kann wähnend der Kompaktierung ein Feststoff, der geeignet ist als Binder zwischen den Partikeln zu fungieren, wie beispielsweise Cellulose, Wachse oder Polymere oder Monomere, welche anschließend polymerisiert werden, zugegeben werden. Der Feststoff wird in Anteilen von 0,1 bis 50 Ges.-%, bevorzugt in Anteilen von 0,5 bis 15 Ges.-%, besonders bevorzugt in Anteilen zwischen 0,5 und 8 Ges.-% zugegeben.

Diese Trockenkompaktierung kann bevorzugt derart erfolgen, dass die trockene Ausgangskieselsäure in einer Kompaktierungseinheit zwischen zwei rotierenden Walze verpresst wird, wobei besonders bevorzugt zumindest eine Walze Vertiefungen, wie Riffeln, Mulden oder Kissen, aufweist, deren charakteristische Abmessungen größer sind als die der zu erzeugenden Partikel. Die Walzen können gerade oder konkav ausgeführt sein. Eine weiter besonders bevorzugte Ausführung besteht darin zumindest eine gelochte Zahnradwalze zu verwenden. Weiterhin kann es vorteilhaft sein, wenn zumindest eine Walze derart ausgestaltet ist, dass an der Walzenoberfläche ein Unterdruck erzeugt werden kann, durch den die zu kompaktierende Kieselsäure an die Walze angesaugt wird. Die Zufuhr der Kieselsäure zu der Kompaktierungseinheit kann mittels aller dem Fachmann bekannten Fördermittel, wie beispielsweise Förderschnecken, Doppelschnecken etc., erfolgen.

Nach der Kompaktierung werden die erhaltenen Stülpen durch ein Sieb mit einer charakteristischen Größe von 3000 μm passiert, wobei die Partikel, die größer als die charakteristische Siebgröße sind, zerkleinert werden. Das Passieren erfolgt bevorzugt in Apparaten wie einer Siebmühle der Firma Frewitt oder der Firma Hosokawa Bepex GmbH. Die Partikel, die größer als die charakteristische Größe des Passiersiebs sind, können beim Einsatz der erfindungsgemäßen Trägermaterialien im Bereich der Suspensionskatalyse zur unerwünschten Sedimentationen der Formulierungen führen und haben lange Diffusions bzw. Reaktionszeiten zur Folge. Weiterhin wird die Siebfraktion kleiner 400 μm abgetrennt. Diese kleinen Partikel wirken sich wie zuvor beschrieben negativ auf den Strömungswiderstand einer Partikelschüttung aus und führen zu Druckverluste in Festbettreaktoren.

Die mögliche Wasserdampfbehandlung an den fertigen getrockneten Granulaten kann in allen dafür geeigneten Apparaten geschehen, dies sind z.B. Bandtrockner, Drehrohrtrockner, Trockenschränke, Wirbelschichttrockner, u.s.w. Die Granulate können einer Temperatur von 70°C-400°C, bevorzugt 80°C - 300°C, besonders bevorzugt 90°C - 200°C und ganz besonders bevorzugt 106°C - 180°C, ausgesetzt werden. Die Verweilzeit bei dieser Temperatur kann bis zu 16h, bevorzugt bis zu 12h, besonders bevorzugt bis zu 8h, ganz besonders bevorzugt bis zu 4h, betragen.

Die mögliche Calcinierung der Partikel kann in verschieden Apparaten, wie z.B. Calcinieröfen, Band- oder Drehrohrcalcinierer, in Flash- oder Wirbelschichtcalcinierern, erfolgen. Die Granulate können dabei Temperaturen von 700°C - 1200°C, bevorzugt 800°C - 1200°C, besonders bevorzugt 800°C - 1100°C, ausgesetzt werden. Die Verweilzeit hängt von der Calciniertemperatur und der gewünschten Partikelhärte ab. Die Verweilzeit in dem Prozess kann 1h, bevorzugt 20 min, besonders bevorzugt weniger als 10 min, betragen.

Ein weiterer Gegenstand der Erfindung ist die Verwendung der erfindungsgemäßen granulären, funktionalisierten Kieselsäuren als Trägermaterial, bevorzugt für Enzyme.

Schließlich ist Gegenstand der Erfindung eine Formulierung, enthaltend zumindest eine erfindungsgemäße granuläre, funktionalisierte Kieselsäure und ein Additiv.

Das Additiv der Formulierung kann chemisch oder physikalisch an die erfindungsgemäße granuläre, funktionalisierte Kieselsäure gebunden sein.

Die erfindungsgemäßen granulären, funktionalisierten Kieselsäuren können zur Herstellung von Formulierungen eingesetzt werden, wobei es sich bei den Additiven bevorzugt um Härtungsmittel oder Initiatoren, Vernetzungsmittel, Katalysatoren, pharmazeutische Wirk- und Hilfsstoffe, kosmetische Wirk- und Hilfsstoffe, Reinigungs- und/oder Pflegemittel, Geschmackes-, Aroma- und Duftstoffe, Futtermittel bzw. Futtermittelzusatzstoffe, wie z.B. Aminosäuren, Vitamine, Mineralstoffe, Lebensmittel bzw. Lebensmittelzusatzstoffe, Farbstoffe und/oder Pigmente, Aminosäuren, Oxidations- oder Bleichmittel, Additive mit mikrobizider, insbesondere fungizider oder bakterizider Wirkung, Chemikalien für die Land- und Forstwirtschaft und/oder ein Betonzusatzstoffe handelt. Dabei kann es sich bei dem Additiv um eine wässrige oder nicht-wässrige Flüssigkeit, z.B. ein Öl, ein Harz, eine Lösung, eine Dispersion, eine Suspension, eine Emulsion, ein Wachs, ein Polymer oder eine Schmelze handeln. Das Additiv kann anschließend thermisch behandelt, getempert, zur Kristallisation, zur Erstarrung, zur Entmischung oder zur Reaktion gebracht werden. Zusätzlich können die Additive vor oder nachher getrocknet werden.

Additive im Bereich Futtermittel und Futtermittelzusatzstoffe umfassen z.B. Vitamine, Mineralstoffe, Carbonsäuren, Mineralsäuren, Aminosäuren, Fette, Öle und Aromen. Besonders bevorzugt handelt es sich dabei um Ameisensäure, Essigsäure, Propionsäure, Milchsäure, Phosphonsäure, Cholinchloridlösung, Vitamin E-Acetat und Pflanzenextrakte, wie zum Beispiel Tagetesextrakt.

Additive im Bereich Land- und Forstwirtschaft umfassen z.B. absorbierte Düngemittel wie z.B. nitrat- und/oder phosphathaltige Dünger, Pflanzenschutzmittel, Schädlingsbekämpfungsmittel, wie z B. Herbizide, Fungizide oder Insektizide.

Additive im Bereich kosmetische Erzeugnisse umfassen z.B. Öle wie etherischen Öle, Parfümöl, Pflegeöle, Duftöle und Silikonöle, antibakterielle, antivirale oder fungizide Wirkstoffen, desinfizierend und antimikrobiell wirkende Substanze, Desodorantien, Antioxidantien, biologisch wirksame Stoffe und biogene Wirkstoffe, Vitamine und Vitaminkomplexe, Enzyme und enzymatische Systeme wie Amylasen, Cellulasen, Lipasen und Proteasen, kosmetisch aktiven Substanze wie Inhaltsstoffe für Kosmetika und Körperpflegemittel, wasch- und reinigungsaktive Substanzen wie Tenside aller Art, wasch- und/oder reinigungsaktive anorganische und organische Säuren, Soil-repellent-und Soil-release-Wirkstoffe, Oxidantien und Bleichmittel, Bleichmittelaktivatoren, Bildern und Cobuildern, Antiredepositionsadditive, Vergrauungs- und Verfärbungsinhibitoren, Wirksubstanzen zum Farbschutz, Substanzen und Additiven zur Wäschepflege, optischen Aufheller, Schauminhibitoren, pH-Stellmitteln und pH-Puffersubstanzen.

Additive im Bereich Lebensmittel bzw. Lebensmittelzusatzstoffe umfassen z.B. absorbierte Aromen, Nahrungsergänzungsmittel, Vitamine, Mineralstoffe und Aminosäuren.

Additive aus pharmazeutischen Wirkstoffen umfassen alle Arten von pharmazeutischen Wirkstoffen wie zum Beispiel $\alpha$-Proteinase-Inhibitor, Abacavir, Abciximab, Acarbose, Acetylsalicylsäure, Acyclovir, Adenosin, Albuterol, Aldesleukin, ALendronat, Alfuzosin, Alosetron, Alprazolam, Alteplase, Ambroxol, Amifostin, Amiodaron, Amisulprid, Amlodipin, Amoxicillin, Amphetamin, Amphotericin, Ampicillin, Amprenavir, Anagrelid, Anastrozol, Ancrod, Anti-Hämophiliefaktor, Aprotinin, Atenolol, Atorvastatin, Atropin, Azelastin, Azithromycin, Azulen, Barnidipin, Beclomethason, Benazepril, Benserazid, Beraprost, Betamethason, Betaxolol, Bezafibrat, Bicalutamid, Bisabolol, Bisoprolol, Botulinus-Toxin, Brimonidin, Bromazepam, Bromocriptin, Budesonid, Bupivacain, Bupropion, Buspiron, Butorphanol, Cabergolin, Calcipotrien, Calcitonin, Calcitriol, Campher, Candesartan, Candesartan cilexetil, Captopril, Carbamazepin, Carbidopa, Carboplatin, Carvedilol, Cefaclor, Cefadroxil, Cefaxitin, Cefazolin, Cefdinir, Cefepim, Cefixim, Cefmetazol, Cefoperazon, Cefotiam, Cefoxopran, Cefpodaxim, Cefprozil, Ceftazidim, Ceftibuten, Ceftriaxon, Cefuroxim, Celecoxib, Celiprolol, Cephalexin, Cerivastatin, Cetirizin, Chloramophenicol, Cilastatin, Cilazapril, Cimetidin, Ciprofibrat, Ciprofloxacin, Cisaprid, Cisplatin, Citalopram, Clarithromycin, Clavulansäure, Clindamycin, Clomipramin, Clonazepam, Clonidin, Clopidogrel, Clotrimazol, Clozapin, Cromolyn, Cyclophosphamid, Cyclosporin, Cyproteron, Dalteparin, Deferoxamin, Desogestrel, Dextroamphetamin, Diazepam, Diclofenac, Didanosin, Digitoxin, Digoxin, Dihydroergotamin, Diltiazem, Diphtherie-Protein, Diphtherie-Toxoid, Divalproex, Dobutamin, Docetaxel, Dolasetron, Donepezil, Dornase-$\alpha$, Dorzolamid, Doxazosin, Doxifluridin, Doxorubicin, Dydrogesteron, Ecabet, Efavirenz, Enalapril, Enoxaparin, Eperison, Epinastin, Epirubicin, Eptifibatid, Erythropoietin-$\alpha$, Erythropoietin-$\beta$, Etanercept, Ethiryylöstradiol, Etodolac, Etoposid, Faktor-VIII, Famciclovir, Famotidin, Faropenem, Felodipin, Fenofibrat, Fenoldopam, Fentanyl, Fexofenadin, Filgrastim, Finasterid, Flomoxef, Fluconazol, Fludarabin, Flunisolid, Flunitrazepam, Fluoxetin, Flutamid, Fluticason, Fluvastatin, Fluvoxamin, Follitropin-$\alpha$, Follitropin-$\beta$, Formoterol, Fosinopril, Furosemid, Gabapentin, Gadodiamid, Ganciclovir, Gatifloxacin, Gemcitabin, Gestoden, Glatiramer, Glibenclamid, Glimepirid, Glipizid, Glyburid, Goserelin, Granisetron, Griseofulvin, Hepatitis-B-Antigen, Hyaluronsäure, Hycosin, Hydrochlorthiazid, Hydrocodon, Hydrocortison, Hydromorphon, Hydroxychloroquin, Hylan G-F 20, Ibuprofen, Ifosfamid, Imidapril, Imiglucerase, Imipenem, Immunoglobulin, Indinavir, Indomethacin, Infliximab, Insulin, Insulin human, Insulin Lispro, Insulin aspart, Interferon-$\beta$, Interferon-$\alpha$, Iod-125, Iodixanol, Iohexol, Iomeprol, Iopromid, Ioversol, Ioxoprolen, Ipratropium, Ipriflavon, Irbesartan, Irinotecan, Isosorbid, Isotretinoin, Isradipin, Itraconazol, Kaliumchlorazepat, Kaliumchlorid, Ketorolac, Ketotifen, Keuchhusten-Vakzin, Koagulationsfaktor-IX , Lamivudin, Lamotrigin, Lansoprazol, Latanoprost, Leflunomid, Lenograstim, Letrozol, Leuprolid, Levodopa, Levofloxacin, Levonorgestrel, Levothyroxin, Lidocain, Linezolid, Lisinopril, Lopamidol, Loracarbef, Loratadin, Lorazepam, Losartan, Lovastatin, Lysinacetylsalicylsäure, Manidipin, Mecobalamin, Medroxyprogesteron, Megestrol, Meloxicam, Menatetrenon, Meningokokken-Vakzin, Menotrapin, Meropenem, Mesalamin, Metaxalon, Metformin, Methylphenidat, Methylprednisolon, Metoprolol, Midazolam, Milrinon, Minocyclin, Mirtazapin, Misoprostol, Mitoxantron, Moclobemid, Modafinil, Mometason, Montelukast, Morniflumat, Morphium, Moxifloxacin, Mykophenolat, Nabumeton, Nadroparin, Naproxen, Naratriptan, Nefazodon, Nelfinavir, Nevirapin, Niacin, Nicardipin, Nicergolin, Nifedipin, Nilutamid, Nilvadipin, Nimodipin, Nitroglycerin, Nizatidin, Norethindron, Norfloxacin, Octreotid, Olanzapin, Omeprazol, Ondansetron, Orlistat, Oseltamivir, Östradiol, Östrogene, Oxaliplatin, Oxaprozin, Oxolinsäure, Oxybutynin, Paclitaxel, Palivizumab, Pamidronat, Pancrelipase, Panipenem, Pantoprazol, Paracetamol, Paroxetin, Pentoxifyllin, Pergolid, Phenytoin, Pioglitazon, Piperacillin, Piroxicam, Pramipexol, Pravastatin, Prazosin, Probucol, Progesteron, Propafenon, Propofol, Propoxyphen, Prostaglandin, Quetiapin, Quinapril, Rabeprazol, Raloxifen, Ramipril, Ranitidin, Repaglinid, Reserpin, Ribavirin, Riluzol, Risperidon, Ritonavir, Rituximab, Rivastigmin, Rizatriptan, Rofecoxib, Ropinirol, Rosiglitazon, Salmeterol, Saquinavir, Sargramostim, Serrapeptase, Sertralin, Sevelamer, Sibutramin, Sildenafil, Simvastatin, Somatropin, Sotalol, Spironolacton, Stavudin, Sulbactam, Sulfaethidol, Sulfamethoxazol, Sulfasalazin, Sulpirid, Sumatriptan, Tacrolimus, Tamoxifen, Tamsulosin, Tazobactam, Teicoplanin, Temocapril, Temozolomid, Tenecteplase, Tenoxicam, Teprenon, Terazosin, Terbinafin, Terbutalin, Tetanus Toxoid, Tetrabenazin, Tetrazapam, Thymol, Tiagabin, Tibolon, Ticarcillin, Ticlopidin, Timolol, Tirofiban, Tizanidin, Tobramycin, Tocopherylnicotinat, Tolterodin, Topiramat, Topotecan, Torasemid, Tramadol, Trandolapril, Trastuzumab, Triamcinolon, Triazolam, Trimebutin, Trimethoprim, Troglitazon, Tropisetron, Tulobuterol, Unoproston, Urofollitropin, Valacyclovir, Valproinsaüre, Valsartan, Vancomycin, Venlafaxin, Verapamil, Verteporfin, Vigabatrin, Vinorelbin, Vinpocetin, Voglibose, Warfarin, Zafirlukast, Zaleplon, Zanamivir, Zidovudin, Zolmitriptan, Zolpidem, Zopiclon und deren Derivate. Unter pharmazeutischen Wirkstoffen sind jedoch auch andere Substanzen wie Vitamine, Provitamine, essentielle Fettsäuren, Extrakte pflanzlicher und tierischer Herkunft, Öle pflanzlicher und tierischer Herkunft, pflanzliche Arzneizubereitungen und homöopathische Zubereitungen zu verstehen.

Die erfindungsgemäßen granulären, funktionalisierten Kieselsäuren in den Formulierungen können insbesondere als Träger für Futtermitteladditive, wie z.B. Ameisensäure, Propionsäure, Milchsäure, Phosphorsäure, Cholinchloridlösung, Vitamin E-Acetat oder Pflanzenextrakten, zum Beispiel Tagetesextrakt, verwendet werden.

Weiterhin können die erfindungsgemäßen granulären, funktionalisierten Kieselsäuren in den Formulierungen als Trägermaterial für chemische Produkte, wie Melaminharze, Gummiadditive, Kunststoffadditive, Additive für Badchemikalien oder Lackadditive, verwendet werden.

Ganz besonders bevorzugt werden die erfindungsgemäßen granulären, funktionalisierten Kieselsäuren in den Formulierungen als Trägermaterial für Katalysatoren aller Art eingesetzt. Bei den Katalysatoren kann es sich insbesondere bevorzugt um Enzyme oder eine Kombination von verschiedenen Enzymen wie z.B. Enzyme aus der Klasse der Oxidoreductasen, Transferasen, Hydrolasen, Lipasen, Lysasen, Isomerasen und Ligasen (gemäß EC (Enzyme Commision) Nummer des Nomenclature Committee of the International Union of Biochemistry and Molecular Biology) handeln. Enzymvarianten, die z.B. durch Rekombinationtechniken hergestellt werden, sollen ebenfalls in dem Begriff Enzym eingeschlossen sein.

Zur Herstellung der Formulierungen werden die erfindungsgemäßen granulären, funktionalisierten Kieselsäuren mit mindestens einem Additiv in Kontakt gebracht, so dass das Additiv in die Poren der Kieselsäuren eindringen kann. Hierzu sind alle dem Fachmann bekannten Technologien wie z.B. Aufsprühen, Auftropfen, Tränke, Imprägnieren, Verdüsen etc. anwendbar. Bevorzugt wird die erfindungsgemäße granulären, funktionalisierte Kieselsäuren in einer Feststoffmischeinheit, wie z.B. Kneter, Schaufeltrockner, Taumelmischer, Vertikalmischer, Schaufelmischer, Schugimischer, Zementmischer, Gerickekontimischer, Eirichmischer und,/oder Silomischer, vorgelegt. Die Temperatur in der Mischeinheit kann in Abhängigkeit von der Art und Zusammensetzung der zu absorbierenden Substanz bevorzugt zwischen 5°C und 90°C, besonders bevorzugt zwischen 10°C und 70°C, betragen. Der Druck im Mischer kann bevorzugt zwischen 0,1 bar und 2 bar, besonders bevorzugt zwischen 0,5 bar und 1,2 bar, betragen.

Der Gehalt aller Additive in der Formulierung kann zwischen 1 und 70 Gew.-%, bevorzugt zwischen 5 und 65 Ges.-%, besonders bevorzugt zwischen 5 und 60 Ges.-%, ganz besonders bevorzugt zwischen 5 und 20 Gew.-%, betragen.

Die erfindungsgemäßen Formulierungen können insbesondere bevorzugt als Katalysatoren in Festbettreaktoren, im Bereich der heterogenen Katalyse, in Wirbelschichtreaktoren und zur Reaktion in Suspensionen eingesetzt werden.

Die physikalisch/chemischen Daten der eingesetzten Rohstoffe und der erfindungsgemäßen granulären Kieselsäure werden mit den folgenden Methoden bestimmt:

## Bestimmun der BET-Oberfläche

Die spezifische Stickstoff-Oberfläche (im Folgenden BET-Oberfläche genannt) Kieselsäuren wird gemäß ISO 9277 als Multipoint-Oberfläche bestimmt. Als Messgerät dient das Oberflächenmessgerät TriStar 3000 der Firma Micromeritics. Die BET-Oberfläche wird üblicherweise in einem Partialdruckbereich von 0,05 - 0,20 des Sättigungsdampfdruckes des flüssige Stickstoffs bestimmt. Die Probenvorbereitung erfolgt durch Temperierung der Probe für eine Stunde bei 160°C unter Vakuum in der Ausheizstation VacPrep 061 der Firma Micromeritics.

## Bestimmung der DBP-Aufnahme

Die DBP-Aufnahme (DBP-Zahl), die ein Maß für die Saugfähigkeit der Kieselsäure darstellt, wird in Anlehnung an die Norm DIN 53601 wie folgt bestimmt.

12,50 g Kieselsäure mit 3 - 10% Feuchtegehalt (gegebenenfalls wird der Feuchtegehalt durch Trocknen bei 105°C im Trockenschrank eingestellt) werden in die Kneterkammer des Absorptometers C der Firma Brabender gegeben. Die Messung am Absorptometer C erfolgt C-gestützt unter Verwendung der Software BRABENDER Automatic Öl Absorption System Version 1.1.2 mit fest vorgegebener Dämpfung der Drehmomentmesskurve.

Im Falle von Filterkuchen wird dieser vor der Verwendung bei 105°C im Trockenschrank bis zu einem Feuchtegehalt von ≤ 10% getrocknet, und über ein 3 mm Sieb sowie anschließend über ein 300 μm Sieb passiert.

Bei einer Umlaufgeschwindigkeit der linken Kneterschaufel von 125 U/min wird bei Raumtemperatur mithilfe der zum Absorptometer C gehörigen Bürette Titronic Universal (Firma Schott) Dibutylphthalat mit einer Geschwindigkeit von 4 ml/min in die Kneterkammer getropft. Der Abschaltpunkt, bei dem die Steuersoftware des Absorptometers C Kneter und DBP-Dosierung stoppt, wird bei einem Drehmoment von 0,6 Nm definiert.

Folgende Formel dient zur Berechnung der DBF-Aufnahme [g/100g]:

$$DBP = \frac{V * D * 100}{E} * \frac{g}{100\,g} + K$$

mit

DBP: DBF-Aufnahme [g/100g]
V: Verbrauch DBP [ml]
D: Dichte DBP [g/ml] (1,047 g/ml bei 20°C)
E: Einwaage Kieselsäure [g]
K: Korrekturwert gemäß Feuchtekorrekturtabelle [g/100 g]

Die DBP-Aufnahme ist für wasserfreie, getrocknete Kieselsäuren definiert. Bei Verwendung von ungetrockneten Kieselsäuren ist der Korrekturwert K für die Berechnung der DBP-Aufnahme zu berücksichtigen. Dieser Wert kann anhand der folgenden Korrekturtabelle ermittelt werden.

Tabelle: Feuchtekorrekturtabelle für Dibutylphthalat-Aufnahme (wasserfrei)

| % Feuchte | ,% Feuchte | | | | |
| --- | --- | --- | --- | --- | --- |
| | ,0 | ,2 | ,4 | ,6 | ,8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

Beispiel:

Beträgt der Feuchtegehalt einer Kieselsäure 5,8%, wird zu dem wie oben beschriebenen analysierten Wert für die DBP-Aufnahme ein Korrekturwert K von 33 g/100g addiert. Die Feuchte einer Kieselsäure wird gemäß der im weiteren Textverlauf beschriebenen Methode "Bestimmung der Feuchte" ermittelt.

**Bestimmung der Partikelgröße mittels Laserbeugung**

Die Anwendung der Laserbeugung zur Bestimmung von Partikelgrößenverteilungen pulverförmiger Feststoffe basiert auf dem Phänomen, dass Partikel in Abhängigkeit von ihrer Größe das Licht eines monochromen Laserstrahls mit differierenden Intensitätsmustern in alle Richtungen streuen bzw. beugen. Je kleiner der Durchmesser des abgestrahlten Partikels ist, desto größer sind die Streuungs- bzw. Beugungswinkel des monochromen Laserstrahls.

Probenvorbereitung für die Partikelgrößenmessung mittels Laserbeugung:

Da die Größe der Probenpartikel zum Teil den Messbereich des verwendeten Gerätes überschreitet und das Verhältnis von d50-Wert ohne Ultraschalleinwirkung zu d50U-Mert nach 3 min Ultraschalleinwirkung von der Ausgangspartikelgröße abhängt (kleinere Partikel eines Materials besitzen ein höheres Verhältnis der beschriebenen Größen), wird vor der Messung eine Partikelfraktion von 400 $\mu$m - 500 $\mu$m aus der Probe ausgesiebt. Durch dieses Vorgehen kann die Stabilität von verschiedenen Materialien zuverlässig verglichen werden und man erhält eine Aussage über die stoffspezifische Stabilität. Die Siebung erfolgt mit eine Siebmaschine HAVER EML 200 Digital Plus, Fa. Haver & Boecker, 59302 Oelde, das mit einem 400 $\mu$m und 500 $\mu$m Sieb ausgerüstet ist. Es werden 5 g des Ausgangsmaterials auf das obere 500 $\mu$m Sieb aufgegeben und 2 Minuten mit einer Amplitudeneinstellung von 1,0 gesiebt. Die Partikelfraktion zwischen 400 $\mu$m und 500 $\mu$m wird für die weitere Messung verwendet.
Sollte die für den Vergleich wichtige Fraktion 400 $\mu$m bis 500 $\mu$m nicht Bestandteil der Partikelgrößenverteilung des vorliegenden Trägermaterial sein, wird eine entsprechende Siebfraktion hergestellt, indem eine ausreichende Menge des Ausgangsmaterials mit Hilfe eines Siebgranulators der Firma Eweka GmbH, Heusenstamm, Typ TG2S bei 100 Oszillationen / Minute über ein 500 $\mu$m Sieb passiert und anschließend über ein 400 $\mu$m Sieb abgesiebt wird. Die Siebung geschieht wie oben beschrieben.

**Bestimmung d$_{50}$-Wert ohne Ultraschalleinwirkung**

Die Probenvorbereitung für die Messung (Spülen des Moduls usw.) mittels Laserbeugungsgerät LS 230 (Fa. Beckman Coulter; Messbereich 0,04 - 2000 $\mu$m) und Flüssigkeitsmodul (Small Volume Module Plus, 120 ml, Fa. Beckman Coulter mit integriertem Ultraschall-Finger) erfolgt im Falle hydrophiler Kieselsäuren mithilfe von 0,05% m/m Tetra-Natriumdiphosphat in VE-Wasser als Dispergierflüssigkeit, im Falle nicht ausreichend mit Wasser benetzbare Kieselsäuren mit einem Ethanol/Wassergemisch (Volumenverhältnis 1:1) als Dispergierflüssigkeit. Vor Beginn der Messung muss das Laserbeugungsgerät 2 Stunden warmlaufen. Danach wird das SVM-Modul dreimal mit der Dispergierflüssigkeit gespült.

Folgende für die Partikelmessung relevante Parameter sind einzustellen:

| | |
|---|---|
| Messzeit: | 60 Sekunden |
| Anzahl der Messungen: | 1 |
| Pumpengeschwindigkeit: | 75% |
| Optisches Modell: | Fraunhofer |
| PIDS-Funktion: | deaktiviert |
| Offsetmessung: | aktiviert |
| Justierung: | Auto |
| Hintergrundmessung: | aktiviert |
| Probenkonzentration einstellen: | aktiviert |

Mittels Spatel erfolgt die Zugabe der Kieselsäuren-Siebfraktion (400 - 500 $\mu$m) bis zum Erreichen der erforderlichen Messkonzentration, die der Laserbeuger LS 230 mit "OK" meldet. Nach Dispergierung der Kieselsäuresuspension für 60 Sekunden durch Umpumpen ohne Ultrabeschallung erfolgt die Messung bei Raumtemperatur. Aus der Rohdatenkurve berechnet die Software auf Basis des Fraunhofer Modells (Fraunhofer.rfd-Datei) die Partikelgrößenver-teilung und den d$_{50}$-Wert ohne Ultraschalleinwirkung (Medianwert).

**Bestimmung d$_{50U}$-Wert nach 3 Minuten Ultrabeschallung bei 100% Amplitude**

Die im Laserbeuger LS 230 befindliche Kieselsäuren-Suspension wird durch Ultrabeschallung für 180 Sekunden mittels im SVM-Modul integriertem Ultraschall-Finger (Ultraschallprozessor Vibra Cell VCX 130 der Firma Sonics mit Ultraschallkonverter CV 181 und 6 mm Ultraschallspitze) bei 100% Amplitude und gleichzeitigem Umpumpen im Flüssigkeitsmodul erneut dispergiert und wie oben beschrieben gemessen.

Aus der Rohdatenkurve berechnet die Software auf Basis des Fraunhofer Modells (Fraunhofer.rfd-Datei) die Partikelgrößenverteilung und den d$_{50U}$-Wert nach 3 Minuten Ultraschallwirkung (Medianwert).

**Bestimmung der Partikelgröße mittels dynamischer Bildauswertung**

Bei der dynamischen Bildauswertung fällt ein Schüttgutstrom zwischen einer Lichtquelle und einer Kamera herab. Die Partikel werden als Projektionsfläche erfasst, digitalisiert und mit einem Computerprogramm in eine Partikelgröße umgerechnet.

**Bestimmung des dQ3=10%-Wert und des dQ3=90%-Wert**

Zur Messung der Partikelgröße wird der CAMSIZER der Firma RETSCH Technology GmbH, Haan eingesetzt. Die Partikel werden mit Hilfe der Dosierrinne DR 100-40 mit Vorratstrichter dem Messgerät zugeführt. Für die Bildauswertung ist die mitgelieferte Software in der Version 3.12d zu verwenden.

Vor Beginn der Messung lässt man das Gerät 2h warmlaufen. Es wird sichergestellt, dass Schutzgläser vor der Beleuchtungseinheit und der Kamera staubfrei sind. Der Abstand zwischen Trichter und Dosierrinne wird ca. auf das dreifache der maximalen Partikelgröße eingestellt. Die Dosierrinne wird direkt über dem Messgerät platziert. Es wird ca. 150 mL Probe in den Trichter eingefüllt. In der Meßaufgabendatei (*.afg) werden die folgenden Parameter für die Messung hinterlegt:

Zur Regelung der Dosierrinne werden die folgenden Einstellungen in der Software hinterlegt:

Bei der Auswertung der digitalisierten Bilder werden die x-Werte aus den min(xc) Werten berechnet. Es werden keine Formfaktoren verwendet:

Die Ausgabe des d$_{Q3=10\%}$-Wert und des d$_{Q3=90\%}$-Wert wird bei den Basiskenngrößen festgelegt:

Es wird keine Meßdatenanpassung mit Hilfe von sogenannten Anpassursdateien. vorgenommen.

### Bestimmung der Feuchte

Die Feuchte von Kieselsäuren wird gemäß ISO 787-2 bestimmt. Hierzu wird eine Probenmenge von 1 - 4 g in einem Trockenschrank bei (105 $\pm$ 2)°C für 2 Stunden getrocknet und entsprechend den ISO-Vorgaben ausgewertet. Dieser Trocknungsverlust besteht überwiegend aus physikalisch gebundenem Wasser.

### Bestimmung des pH-Wertes der Kieselsäuren

Die Bestimmung des pH-Wertes der Kieselsäure erfolgt als wässrige Suspension bei Raumtemperatur. Granulierte Proben werden vorab gemörsert oder vermahlen. Es werden zu 5 g Kieselsäuren 95 g entionisiertes Wasser gegeben. Die Suspension wird mittels Magnetrührer 5 Minuten gerührt. Direkt im Anschluss wird mithilfe eines im zu erwartenden Messbereich kalibrierten pH-Meters (Metrohm 780 pH Meter) der pH-Wert der Suspension auf eine Dezimalstelle genau gemessen.

### Bestimmung des Quecksilber-Porenvolumens ≤ 4 μm

Die Methode basiert auf der Quecksilber-Intrusion gemäß DIN 66133, wobei ein AutoPore IV 9520-Gerät der Firma Micromeritics verwendet wird.

Das Verfahrenprinzip beruht auf der Messung des in einen porösen Feststoff eingepressten Quecksilbervolumens in Abhängigkeit von dem angewendeten Druck. Dabei werden nur die Poren erfasst, in die bei dem angewendeten Druck (max. 414 MPa) Quecksilber eindringen kann (Verfahren von Ritter und Drake).

Eine nichtbsnetzende Flüssigkeit dringt nur unter Druck in ein poröses System ein. Der aufzuwendende Druck ist umgekehrt proportional zur lichten Weite der Porenöffnungen. Für zylindrische Poren ist der Zusammenhang zwischen Porenradius $r_p$ und Druck p durch die Washburn-Gleichung gegeben:

$$r_p = -\frac{2 \times \sigma}{p} \times \cos\theta$$

$r_p$:     Porenradius
p:     Druck
$\sigma$:     Oberflächenspannung (480 mN/m*)
$\theta$:     Kontaktwinkel des Quecksilbers (140°*) *gemäß DIN 66133

Das Quecksilber-Porenvolumen ≤ 4 μm ergibt sich aus dem kumulierten Porenvolumen aller Poren mit einem Durchmesser von ≤ 4 μm bis zur Bestimmungsgrenze des Quecksilber-Porosimeters AutoPore IV 9520 (Maximaldruck 414 MPa).

Die folgenden Beispiele sollen die Erfindung näher erläutern, ohne ihren Umfang zu beschränkten.

### Bestimmung des C-Gehaltes

Die Bestimmung des Kohlenstoffgehaltes erfolgt mittels eines Elementanalysators der Firma LECO (Typ CS 244 oder CS 600). Dabei wird das Oxid in einen Keramiktiegel eingewogen, mit Verbrennungszuschlägen versehen und in einem Induktionsofen unter einem Sauerstoffstrom erhitzt. Der vorhandene Kohlenstoff wird hierbei zu $CO_2$ oxidiert.

Diese Gasmenge wird über Infrarotdetektoren quantifiziert. Vor der eigentlichen Messung wird eine Kalibrierung des Geräts mit geeignetem Referenzmaterial durchgeführt.

#### *Arbeitsablauf*

Vom Probenmaterial wird ca. 50 bis 150 mg auf 1 mg genau in einen Keramiktiegel eingewogen. Das Probenmaterial wird mit ca. 1 g Lecocel II (Pulver einer Wolfram-Zinn(10%ige)-Legierung) und etwa 0,7 g Eisenspäne überdeckt. Anschließend wird der Tiegel mit einem Deckel verschlossen. Der Induktionsofen wird auf maximale Leistung eingestellt und 10 s mit Sauerstoff gespült. Nachdem dann der Tiegel in den Induktionsofen eingesetzt wurde, wird die automatische Messung und Auswertung gestartet. Pro Probe werden Mehrfachbestimmungen durchgeführt. Das Ergebnis wird in Ges.-% angegeben.

Die Kohlenstoffnachweisgrenze dieser analytischen Methode liegt bei 300 μg/g.

**Bestimmung der Stampfdichte**

Die Stampfdichte wird nach DIN EN ISO 787-11 bestimmt.

**Bestimmung des Glühverlustes**

Der Glühverlust wird in Anlehnung an ISO 3262-1 bestimmt. Abweichend zur ISO 3262-1 werden

- anstelle von Platin- oder Porzellanschalen, Porzellan- bzw. Schmelztiegel für die Bestimmung verwendet,
- ca. 0,5 g *(500 mg)* anstelle von ca. 2 g der zu prüfenden Kieselsäuren eingewogen,
- das zu untersuchende Material nicht vorab getrocknet, sondern es erfolgt die Feuchtekorrektur durch eine separate Bestimmung des Trocknungsverlustes in Anlehnung an ISO 787-2.

**Beispiele**

**Vergleichsbeispiel 1**

SIPERNAT® 50 S der Firma Evonik Industries wird in einem Mischer (Firma Eirich R02) unter Zusatz von 220 ml Wasser / 100 g Kieselsäure gemischt und verdichtet. Dabei wird der 10 Liter Mischbehälter, ausgestattet mit dem Mischwerkzeug Stiftwirbler, bei Raumtemperatur verwendet. Um einen optimalen Füllgrad des Mischers zu erhalten, wird 1 kg SIPERNAT® 50 S vorgelegt. Die Wasserzugabe erfolgt bei einer Umfangsgeschwindigkeit des Wirblers von 20 m/s gleichmäßig innerhalb einer Minute. Der Teller läuft immer auf Stufe 1. Im Anschluss wird der Stiftwirbler auf 40 m/s betrieben. Der Prozess wird angehalten sobald die gewünschte Agglomeratgröße entstanden ist. Die erhaltenen Granulate werden bei 160°C im Trockenschrank bis zur Gewichtskonstanz getrocknet, anschließend durch Siebung auf 400 - 1250 $\mu$m fraktioniert. Zu Prüfzwecken wird für einzelne Tests eine Siebfraktion 400 - 500 $\mu$m hergestellt, sie wird für die anschließende Prüfung der Härte und der Porosität verwendet.

**Beispiel 1 und 2**

Die Granulate aus dem Vergleichsbeispiel werden in einem Pflugscharmischer vorgelegt und unter Mischen mit dem Oberflächenmodifizierungsmittel mittels einer Zweistoffdüse (Trägergas: Stickstoff) besprüht. Nachdem das Sprühen beendet ist, wird noch 15 Minuten nachgemischt.

Das Gemisch wird anschließend in einem Trockenschrank thermisch behandelt (Temperung).

Die genauen Versuchsparameter zur Herstellung der Beispiele 1 und 2 (vergleichsbeispiel) sind in der nachfolgenden Tabelle 1 aufgeführt.

Tabelle 1

| Bezeichnung | Menge Granulat aus Vergleichbeispiel 1 [kg] | OM*/ Menge [kg] | Teile OM*/ 100 Teile Granulat | Tempertemperatur [°C] | Temperzeit [h] |
|---|---|---|---|---|---|
| Beispiel 1 | 4,8 | A/1, 45 | 30 | 130 | 3 |
| Beispiel 2 (Vergleichsbeispiel) | 2,5 | B/0, 87.5 | 35 | 130 | 3 |
| *:OM = Oberflächenmodifizierungsmittel, A = 3-Aminopropyltriethoxysilan, B =3-Methacryloxypropyl-trimethoxysilan | | | | | |

In den Tabellen 2a und 2b sind die physikalisch-chemischen Daten der erfindungsgemäßen, oberflächenmodifizierten Kieselsäuren und Vergleichskieselsäure enthalten.

Tabelle 2a

| Bezeichnung | Stampfdichte [g/l] | Trocknungverlust [%] | Glühverlust [%] | C-Gehalt [%] | pH-Wert |
|---|---|---|---|---|---|
| Beispiel 1 | 350 | 0,3 | 10,5 | 5,3 | 10,2 |
| Beispiel 2 (Vergleichsbeispiel) | 377 | 1,0 | 17,5 | 11,4 | 7,8 |
| Vergleichsbeispiel 1 | 308 | 3,4 | 4,7 | <0,1 | 6,5 |

Tabelle 2b

| Bezeichnung | D50 ohne Ultraschall ($d50_{ous}$) [$\mu$m] | D50 nach 3 min Ultraschall ($d50_{US}$) [$\mu$m] | Quotient ($d50_{us}$/$d50_{oUS}$) | Hg-Porenvolumen < 4 $\mu$m [ml/g] | dQ3=10% [$\mu$m] | dQ3=90% [$\mu$m] |
|---|---|---|---|---|---|---|
| Beispiel 1 | 543,4 | 491,4 | 1,11 | 1,20 | 446 | 977 |
| Beispiel 2 (Vergleichsbeispiel) | 524,9 | 497,1 | 1,06 | 1,02 | 459 | 961 |
| Vergleichsbeispiel 1 | 523,9 | 441,8 | 1,19 | 1, 45 | 467 | 988 |

**Desorptionstest von mit Silikonöl beladenen Trägern**

**1. Herstellung der Formulierungen (Absorbate)**

8 g Silikonöl DOW DC 200 50cs werden in ein Becherglas eingewogen, 10 g granuläre Kieselsäure (Trocknungsverlust <= 6%) werden hinzugegeben und im Anschluss mittels Spatel vermischt bis sich ein trockenes und fließfähiges Absorbat ergibt. Das so erhaltene Absorbat wird dann bei Raumtemperatur (23 °C) für 14 Tage gelagert.

- Vergleichsformulierung 1 : 5 g Vergleichsbeispiel 1 + 4 g Silikonöl DC200 50cs

- Erfindungsgemäße Formulierung 1: 5 g Beispiel 1 + 4 g Silikonöl DC200 50cs

- Vergleichsformulierung 2: 5 g Beispiel 2 + 4 g Silikonöl DC200 50cs

**2. Bestimmung der Desorptionseigenschaft**

- Es wird eine Tensidlösung hergestellt indem 10 g Triton X160 in 490 g VE-Wasser gelöst werden.
- Ein 50 ml Zentrifugenröhrchen wird mit 20 ml Tensidlösung gefüllt und 9 g der unter 1 beschriebenen Formulierung hinzugegeben.
- Das Zentrifugenröhrchen wird 10 Mal über Kopf geschwenkt und 5 min ruhen lassen.
- Der Überstand wird in eine ausgewogene Glasschale über ein 200 $\mu$m Sieb dekantiert.
- Die zurückbehalten Menge an Absorbate wird erneut in 20 ml Tensidlösung dispergiert und der Ausschüttelschritt insgesamt 5 Mal wiederholt (5 x 20 ml Tensidlösung). Die jeweils dekantieren Flüssigkeitsmengen werden in der Glasschale gesammelt.
- Die gesammelten dekantieren Tensidlösungen werden 3 h bei 110°C abtrocknen lassen und der Rückstand exakt ausgewogen.
- Als Nullprobe (um die Rückstandmenge ohne Siliconöl zu bestimmen) werden 5 g Vergleichsbeispiel 1 in 100 ml Tensidlösung dispergiert, danach dekantiert und getrocknet.

**3. Ergebnis (14 Tage gelagerte Proben bei RT)**

Der prozentuale Anteil an freigesetztem Siliconöl wird jeweils wie folgt berechnet:

```
((Rückstand - Nullprobe) x 100) / 4 = Freisetzung[%]
```

**Ergebnisse**

- Nullprobe: 1,409 g Rückstand
- Vergleichsbeispiel 1: 3,38 g Rückstand => 49,3% Freisetzung
- Beispiel 1: 1,60 g Rückstand => 4,8 % Freisetzung
- Beispiel 2 (Vergleichsbeispiel): 2,02 g Rückstand => 15,3 % Freisetzung

Das erfindungsgemäße Beispiel zeigt eine deutlich niedrigere Freisetzung und damit höhere Absorption.

**Patentansprüche**

1. Granuläre, funktionalisierte Kieselsäure, **dadurch gekennzeichnet, dass**

    - das Hg-Porenvolumen (< 4 $\mu$m) mehr als 0,80 ml/g,
    - der $d_{Q3=10\%}$-Wert mehr als 400 $\mu$m,
    - der $d_{Q3=90\%}$-Wert weniger als 3000 $\mu$m,
    - das Verhältnis des $d_{50}$-Werts ohne Ultraschalleinwirkung zu $d_{50}$-Wert nach 3 min Ultraschalleinwirkung < 4,00, wobei die Messung an einer Fraktion von Partikeln von 400 bis 500 $\mu$m mit dem Laserbeugungsgerät LS 230 der Firma Beckman Coulter, Messbereich 0.04-2000 $\mu$m und Flüssigkeitsmodul Small Volume Module Plus, 120 ml der Firma Beckman Coulter mit integriertem Ultraschall-Finger, Ultraschallprozessor Vibra Cell VCX 130 der Firma Sonics mit Ultraschallkonverter CV 181 und 6 mm Ultraschallspitze bei 100 % Amplitude in einem Ethanol/Wassergemisch, Volumenverhältnis 1:1 erfolgt, und
    - der C-Gehalt 1,0-15,0 Gew.-% ist und

    diese die funktionellen Gruppen
    $Si(CH_2)_m$-R', $(R'')_xSi(CH_2)_m$-R', $Si(CH_2)_m$-R' oder $(R'')_xSi(CH_2)_m$-R', mit m = 0, 1 - 20,
    R' = $-NH_2$, $-NH-CH_2-CH_2-NH_2$, $-N-(CH_2-CH_2-NH_2)_2$, $-NH-CO-N-CO-(CH_2)_5$, $-NH-COO-CH_3$,$-NH-COO-CH_2-CH_3$,
    $-NH-(CH_2)_3Si(OR)_3$ $-NH-(CH_2)_3-CH_3$ oder $-NH-CH_2-CH_2-NH-CH_2-CH_2-NH_2$,
    R'' = Alkyl, Cycloalkyl,
    x =1 oder 2,
    enthält.

2. Granuläre, funktionalisierte Kieselsäure nach Anspruch 1,
    **dadurch gekennzeichnet, dass** diese einen pH-Wert im Bereich von 5,0 bis 11,0 hat.

3. Granuläre, funktionalisierte Kieselsäure nach Anspruch 1 oder 2,
    **dadurch gekennzeichnet, dass** diese ein Verhältnis des $d_{50}$-Werts ohne Ultraschalleinwirkung zu $d_{50}$-Wert nach 3 min Ultraschalleinwirkung von 1,00 bis 3,00 hat, wobei die Messung an einer Fraktion von Partikeln von 400 bis 500 $\mu$m mit dem Laserbeugungsgerät LS 230 der Firma Beckman Coulter, Messbereich 0.04-2000 $\mu$m und Flüssigkeitsmodul Small Volume Module Plus, 120 ml der Firma Beckman Coulter mit integriertem Ultraschall-Finger, Ultraschallprozessor Vibra Cell VCX 130 der Firma Sonics mit Ultraschallkonverter CV 181 und 6 mm Ultraschallspitze bei 100 % Amplitude in einem Ethanol/Wassergemisch, Volumenverhältnis 1:1 erfolgt.

4. Granuläre, funktionalisierte Kieselsäure nach Anspruch 1 oder 2,
    **dadurch gekennzeichnet, dass** diese ein Hg-Porenvolumen (<4$\mu$m) von mehr als 0,90 ml/g hat.

5. Granuläre, funktionalisierte Kieselsäure nach Anspruch 1 oder 2,
    **dadurch gekennzeichnet, dass** diese ein Hg-Porenvolumen (< 4 $\mu$m) von 0,81 bis 1,50 ml/g hat.

**6.** Verfahren zur Herstellung von granulären, funktionalisierten Kieselsäuren gemäß den Ansprüchen 1 bis 5 umfassend die Schritte

a) Bereitstellen einer gefällten oder pyrogenen Kieselsäure mit einer mittleren Partikelgröße $d_{50}$ ohne Ultraschallbehandlung von 0,1 bis 350 $\mu$m,
b) Befeuchtung der Kieselsäure aus Schritt a) auf einen Trocknungsverlust von 30-80 Gew.-%,
c) Formgebung der Kieselsäure aus Schritt b) durch Extrusion, Granulation, Kompaktierung oder Tablettierung,
d) Trocknung der Kieselsäureformkörper in einem Trocknungsaggregat,
e) Siebgranulation oder Siebung der Granulate bei einer Siebgröße von 3000 $\mu$m und Absiebung des Feinanteils mit einer Siebmaschenweite von 400 $\mu$m und
f) Umsetzung der Granulate aus Schritt e) mit einem Oberflächenmodifizierungsmittel, wobei als Oberflächenmodifizierungsmittel mindestens eines der folgenden Organosilane oder Gemische der Organosilane eingesetzt werden

a) Organosilane der Formel $(RO)_3Si(CH_2)_m$-R',
b) Organosilane der Formel $(R'')_x(RO)_{(3-x)}Si(CH_2)_m$-R',
c) Halogenorganosilane der Formel $X_3Si(CH_2)_m$-R' oder
d) Halogenorganosilane der Formel $(R'')_xX_{(3-x)}Si(CH_2)_m$-R',

mit
R = Alkyl, vorzugsweise Methyl-, Ethyl- oder Propyl-,
R' = $-NH_2$, $-NH-CH_2-CH_2-NH_2$, $-N-(CH_2-CH_2-NH_2)_2$, $-NH-CO-N-CO-(CH_2)_5$, $-NH-COO-CH_3$, $-NH-COO-CH_2-CH_3$, $-NH-(CH_2)_3Si(OR)_3$ $-NH-(CH_2)_3-CH_3$ oder $-NH-CH_2-CH_2-NH-CH_2-CH_2-NH_2$,
R'' = Alkyl, Cycloalkyl,
X = Cl oder Br,
x = 1 oder 2,
m = 0, 1 - 20.

**7.** Verfahren nach Anspruch 6,
**dadurch gekennzeichnet, dass** ein wasserhaltiger Filterkuchen mit einem Trocknungsverlust von 30-80 Gew.% als Ausgangsmaterial für Schritt a) verwendet wird.

**8.** Verfahren nach Anspruch 6,
**dadurch gekennzeichnet, dass** die Kieselsäure in Schritt c) in schnell laufenden Intensivmischern verdichtet und granuliert wird.

**9.** Verfahren zur Herstellung von granulären, funktionalisierten Kieselsäuren gemäß den Ansprüchen 1 bis 5 umfassend die Schritte

i) Bereitstellen einer gefällten oder pyrogenen Kieselsäure mit einem Trocknungsverlust < 30 Gew.%, und mit einer mittleren Partikelgröße $d_{50}$ ohne Ultraschallbehandlung von 0,1 bis 350 $\mu$m,
ii) Formgebung der Kieselsäure aus Schritt i) durch Trockenkompaktierung, vorzugsweise zwischen zwei rotierenden Walzen, bei einem spezifischen Anpressdruck von 0,5 kN/cm Walzenbreite bis 12 kN/cm Walzenbreite zu Stülpen,
iii) Siebgranulation oder Siebung der Stülpen bei einer Siebgröße von 3000 $\mu$m und Absiebung des Feinanteils mit einer Siebmaschenweite von 400 $\mu$m und
iv) Umsetzung der Granulate aus Schritt iii) mit einem Oberflächenmodifizierungsmittel, wobei als Oberflächenmodifizierungsmittel mindestens eines der folgenden Organosilane oder Gemische der Organosilane eingesetzt werden

a) Organosilane der Formel $(RO)_3Si(CH_2)_m$-R',
b) Organosilane der Formel $(R'')_x(RO)_{(s-x)}Si(CH_2)_m$-R',
c) Halogenorganosilane der Formel $X_3Si(CH_2)_m$-R' oder
d) Halogenorganosilane der Formel $(R'')_xX_{(3-x)}Si(CH_2)_m$-R',

mit
R = Alkyl, vorzugsweise Methyl-, Ethyl- oder Propyl-,
R' = $-NH_2$, $-NH-CH_2-CH_2-NH_2$, $-N-(CH_2-CH_2-NH_2)_2$, $-NH-CO-N-CO-(CH_2)_5$, $-NH-COO-CH_3$, $-NH-COO-

CH$_2$-CH$_3$, -NH-(CH$_2$)$_3$Si(OR)$_3$, -NH-(CH$_2$)$_3$-CH$_3$ oder -NH-CH$_2$-CH$_2$-NH-CH$_2$-CH$_2$-NH$_2$,
R" = Alkyl, Cycloalkyl,
X = Cl oder Br,
x = 1 oder 2,
m = 0, 1 - 20.

**10.** Verfahren nach einem der Ansprüche 6 bis 9,
**dadurch gekennzeichnet, dass** alle Siebfraktionen kleiner 400 μm abgetrennt werden.

**11.** Verfahren nach einem der Ansprüche 6 oder 9,
**dadurch gekennzeichnet, dass** die Formgebungsschritte c) beziehungsweise ii) ohne die Zuführung von Bindern durchgeführt werden.

**12.** Verwendung der granulären Kieselsäuren nach einem der Ansprüche 1 bis 5 zur Herstellung von Formulierungen.

**13.** Formulierung, enthaltend mindestens eine der granulären Kieselsäuren nach einem der Ansprüche 1 bis 5 und ein Additiv.

**14.** Formulierung nach Anspruch 13,
**dadurch gekennzeichnet, dass** als Additiv mindestens eine katalytisch aktive Substanz eingesetzt wird.

**15.** Formulierung nach einem der Ansprüche 13 oder 14,
**dadurch gekennzeichnet, dass** die Formulierung das Additiv in Anteilen zwischen 1 und 70 Gew.-% enthält.

**16.** Formulierung nach Anspruch 13,
**dadurch gekennzeichnet, dass** als Additiv Härtungsmittel oder Initiatoren, Vernetzungsmittel, Katalysatoren, pharmazeutische Wirk- und Hilfsstoffe, kosmetische Wirk- und Hilfsstoffe, Reinigungs- und/oder Pflegemittel, Geschmacks-, Aroma- und Duftstoffe, Futtermittel bzw. Futtermittelzusatzstoffe, Vitamine, Mineralstoffe, Lebensmittel bzw. Lebensmittelzusatzstoffe, Farbstoffe und/oder Pigmente, Aminosäuren, Oxidations- oder Bleichmittel, Additive mit mikrobizider, Chemikalien für die Land- und Forstwirtschaft und/oder ein Betonzusatzstoffe eingesetzt wird.

**17.** Formulierung nach Anspruch 16,
**dadurch gekennzeichnet, dass** das Additiv ein Enzym ist.

## Claims

**1.** Granular functionalized silica, **characterized in that**

- the Hg pore volume (< 4 μm) is more than 0.80 ml/g,
- $d_{Q3=10\%}$ is more than 400 μm,
- $d_{Q3=90\%}$ is less than 3000 μm,
- the ratio of $d_{50}$ without ultrasound exposure to $d_{50}$ after 3 min of ultrasound exposure is < 4.00, the measurement being effected on a fraction of particles of 400 to 500 μm using the LS 230 laser diffraction system from Beckman Coulter, measurement range 0.04-2000 μm and Small Volume Module Plus liquid module, 120 ml from Beckman Coulter with integrated ultrasound finger, Vibra Cell VCX 130 ultrasound processor from Sonics with CV 181 ultrasound converter and 6 mm ultrasound tip at 100% amplitude in an ethanol/water mixture, volume ratio 1:1, and
- the carbon content is 1.0-15.0% by weight and it contains the functional groups
Si(CH$_2$)$_m$-R', (R")$_x$Si(CH$_2$)$_m$-R', Si(CH$_2$)$_m$-R' or
(R'')$_x$Si(CH$_2$)$_m$-R' where
m = 0, 1 - 20,
R' = -NH$_2$, -NH-CH$_2$-CH$_2$-NH$_2$, -N-(CH$_2$-CH$_2$-NH$_2$)$_2$, -NH-CO-N-CO-(CH$_2$)$_5$, -NH-COO-CH$_3$, -NH-COO-CH$_2$-CH$_3$, -NH-(CH$_2$)$_3$Si(OR)$_3$, -NH-(CH$_2$)$_3$-CH$_3$ or -NH-CH$_2$-CH$_2$-NH-CH$_2$-CH$_2$-NH$_2$,
R" = alkyl, cycloalkyl,
x = 1 or 2.

**2.** Granular functionalized silica according to Claim 1,

**characterized in that** it has a pH in the range from 5.0 to 11.0.

3. Granular functionalized silica according to Claim 1 or 2,
**characterized in that** it has a ratio of $d_{50}$ without ultrasound exposure to $d_{50}$ after 3 min of ultrasound exposure of 1.00 to 3.00, the measurement being effected on a fraction of particles of 400 to 500 $\mu$m using the LS 230 laser diffraction system from Beckman Coulter, measurement range 0.04-2000 $\mu$m and Small Volume Module Plus liquid module, 120 ml from Beckman Coulter with integrated ultrasound finger, Vibra Cell VCX 130 ultrasound processor from Sonics with CV 181 ultrasound converter and 6 mm ultrasound tip at 100% amplitude in an ethanol/water mixture, volume ratio 1:1.

4. Granular functionalized silica according to Claim 1 or 2,
**characterized in that** it has an Hg pore volume (< 4 $\mu$m) of more than 0.90 ml/g.

5. Granular functionalized silica according to Claim 1 or 2,
**characterized in that** it has an Hg pore volume (< 4 $\mu$m) of 0.81 to 1.50 ml/g.

6. Process for producing granular functionalized silicas according to Claims 1 to 5, comprising the steps of

a) providing a precipitated or fumed silica having a mean particle size $d_{50}$ without ultrasound treatment of 0.1 to 350 $\mu$m,
b) moistening the silica from step a) to a drying loss of 30-80% by weight,
c) shaping the silica from step b) by extrusion, granulation, compaction or tabletting,
d) drying the shaped silica bodies in a drying unit,
e) screen granulation or screening of the granules at a screen size of 3000 $\mu$m and screening off the fines with a screen mesh size of 400 $\mu$m and
f) reacting the granules from step e) with a surface modifier,
wherein the surface modifier used is at least one of the following organosilanes or mixtures of the organosilanes

a) organosilanes of the formula (RO)3Si(CH2)m-R',
b) organosilanes of the formula (R")x(RO)(3-x)Si(CH2)m-R',
c) haloorganosilanes of the formula X3Si(CH2)m-R' or
d) haloorganosilanes of the formula (R")xX(3-x) Si(CH2)m-R',
where
R = alkyl, preferably methyl, ethyl or propyl,
R' = -NH2, -NH-CH2-CH2-NH2, -N-(CH2-CH2-NH2)2, - NH-CO-N-CO-(CH2)5, -NH-COO-CH3, -NH-COO-CH2-CH3, -NH-(CH2)3Si(OR)3, -NH-(CH2)3-CH3 or -NH-CH2-CH2-NH-CH2-CH2-NH2,
R" = alkyl, cycloalkyl,
X = Cl or Br,
x = 1 or 2.
m = 0, 1 - 20.

7. Process according to Claim 6,
**characterized in that** a water-containing filtercake with a drying loss of 30-80% by weight is used as the starting material for step a).

8. Process according to Claim 6,
**characterized in that** the silica in step c) is compacted and granulated in high-speed intensive mixers.

9. Process for producing granular functionalized silicas according to Claims 1 to 5, comprising the steps of

i) providing a precipitated or fumed silica having a drying loss < 30% by weight, and having a mean particle size $d_{50}$ without ultrasound treatment of 0.1 to 350 $\mu$m,
ii) shaping the silica from step i) by dry compaction, preferably between two rotating rollers, at a specific contact pressure of 0.5 kN/cm of roller width to 12 kN/cm of roller width to give slugs,
iii) screen granulation or screening of the slugs at a screen size of 3000 $\mu$m and screening off the fines with a screen mesh size of 400 $\mu$m and
iv) reacting the granules from step iii) with a surface modifier,
wherein the surface modifier used is at least one of the following organosilanes or mixtures of the organosilanes

a)organosilanes of the formula (RO)3Si(CH2)m-R',
b)organosilanes of the formula (R")x(RO)(3-x)Si(CH2)m-R',
c)haloorganosilanes of the formula X3Si(CH2)m-R' or
d)haloorganosilanes of the formula (R")xX(3-x) Si(CH2)m-R',
where
R = alkyl, preferably methyl, ethyl or propyl, R' = -NH2, -NH-CH2-CH2-NH2, -N-(CH2-CH2-NH2)2, - NH-CO-N-CO-(CH2)5, -NH-COO-CH3, -NH-COO-CH2-CH3, -NH-(CH2)3Si(OR)3, -NH-(CH2)3-CH3 or -NH-CH2-CH2-NH-CH2-CH2-NH2,
R" = alkyl, cycloalkyl,
X = Cl or Br,
x = 1 or 2.
m = 0, 1 - 20.

10. Process according to any of Claims 6 to 9,
   **characterized in that** all screen fractions smaller than 400 $\mu$m are removed.

11. Process according to either of Claims 6 and 9,
   **characterized in that** shaping steps c) or ii) are performed without the addition of binders.

12. Use of the granular silicas according to any of Claims 1 to 5 for production of formulations.

13. Formulation comprising at least one of the granular silicas according to any of Claims 1 to 5 and an additive.

14. Formulation according to Claim 13,
   **characterized in that** the additive used is at least one catalytically active substance.

15. Formulation according to either of Claims 13 and 14,
   **characterized in that** the formulation contains the additive in proportions between 1 and 70% by weight.

16. Formulation according to Claim 13,
   **characterized in that** the additive used comprises hardening agents or initiators, crosslinking agents, catalysts, active pharmaceutical ingredients and excipients, active cosmetic ingredients and excipients, cleansing and/or care compositions, flavourings, aromas and fragrances, animal feeds or animal feed additives, vitamins, minerals, foods or food additives, dyes and/or pigments, amino acids, oxidizing or bleaching agents, additives with microbicidal action, chemicals for agriculture and forestry, and/or concrete admixtures.

17. Formulation according to Claim 16,
   **characterized in that** the additive is an enzyme.

**Revendications**

1. Silice fonctionnalisée granulaire, **caractérisée en ce que**

   - le volume poreux Hg (< 4 $\mu$m) est supérieur à 0,80 ml/g,
   - la valeur $d_{Q3=10\,\%}$ est supérieure à 400 $\mu$m,
   - la valeur $d_{Q3=90\,\%}$ est inférieure à 3 000 $\mu$m,
   - le rapport entre la valeur $d_{50}$ sans sonication et la valeur $d_{50}$ après 3 minutes de sonication est < 4,00, la mesure ayant lieu sur une fraction de particules de 400 à 500 $\mu$m avec l'appareil de diffraction laser LS 230 de la société Beckman Coulter, plage de mesure 0,04 à 2 000 $\mu$m, et le module de liquide Small Volume Module Plus, 120 ml de la société Beckman Coulter avec sonde à ultrasons intégré, processeur d'ultrasons Vibra Cell VCX 130 de la société Sonics avec convertisseur d'ultrasons CV 181 et pointe d'ultrasons 6 mm à 100 % d'amplitude dans un mélange éthanol/eau, rapport en volume 1:1, et
   - la teneur en C est de 1,0 à 15,0 % en poids, et celle-ci contient les groupes fonctionnels
   $Si(CH_2)_m$-R', (R")x$Si(CH_2)_m$-R', $Si(CH_2)_m$-R' ou (R")x$Si(CH2)_m$-R', avec m = 0, 1 à 20,
   R' = -NH$_2$, -NH-CH$_2$-CH$_2$-NH$_2$, -N-(CH$_2$-CH$_2$-NH$_2$)$_2$, -NH-CO-N-CO-(CH$_2$)$_5$, -NH-COO-CH$_3$, -NH-COO-CH$_2$-CH$_3$, -NH-(CH$_2$)$_3$Si(OR)$_3$, - NH-(CH$_2$)$_3$-CH$_3$ ou -NH-CH$_2$-CH$_2$-NH-CH$_2$-CH$_2$-NH$_2$, R" = alkyle, cycloalkyle,
   x = 1 ou 2.

**2.** Silice fonctionnalisée granulaire selon la revendication 1, **caractérisée en ce que** celle-ci a un pH dans la plage allant de 5,0 à 11,0.

**3.** Silice fonctionnalisée granulaire selon la revendication 1 ou 2, **caractérisée en ce que** celle-ci a un rapport entre la valeur $d_{50}$ sans sonication et la valeur $d_{50}$ après 3 minutes de sonication de 1,00 à 3,00, la mesure ayant lieu sur une fraction de particules de 400 à 500 $\mu$m avec l'appareil de diffraction laser LS 230 de la société Beckman Coulter, plage de mesure 0,04 à 2 000 $\mu$m, et le module de liquide Small Volume Module Plus, 120 ml de la société Beckman Coulter avec sonde à ultrasons intégrée, processeur d'ultrasons Vibra Cell VCX 130 de la société Sonics avec convertisseur d'ultrasons CV 181 et pointe d'ultrasons 6 mm à 100 % d'amplitude dans un mélange éthanol/eau, rapport en volume 1:1.

**4.** Silice fonctionnalisée granulaire selon la revendication 1 ou 2, **caractérisée en ce que** celle-ci a un volume poreux Hg (< 4 $\mu$m) supérieur à 0,90 ml/g.

**5.** Silice fonctionnalisée granulaire selon la revendication 1 ou 2, **caractérisée en ce que** celle-ci a un volume poreux Hg (< 4 $\mu$m) de 0,81 à 1,50 ml/g.

**6.** Procédé de fabrication de silices fonctionnalisées granulaires selon les revendications 1 à 5, comprenant les étapes suivantes:

a) la préparation d'une silice précipitée ou pyrogénée ayant une taille de particule moyenne $d_{50}$ sans traitement aux ultrasons de 0,1 à 350 $\mu$m,
b) l'humidification de la silice de l'étape a) à une perte au séchage de 30 à 80 % en poids,
c) le façonnage de la silice de l'étape b) par extrusion, granulation, compactage ou pastillage,
d) le séchage du corps moulé de silice dans un appareil de séchage,
e) la granulation avec tamisage ou le tamisage des granulats à une taille de tamisage de 3 000 $\mu$m et l'élimination par tamisage de la fraction de fines avec une largeur de mailles de tamis de 400 $\mu$m et
f) la mise en réaction des granulats de l'étape e) avec un agent de modification de surface, au moins un des organosilanes suivants ou des mélanges des organosilanes étant utilisés en tant qu'agent de modification de surface :

a) les organosilanes de formule $(RO)_3Si(CH_2)_m$-R',
b) les organosilanes de formule $(R'')_x(RO)_{(3-x)}Si(CH_2)_m$-R',
c) les halogéno-organosilanes de formule $X_3Si(CH_2)_m$-R' ou
d) les halogéno-organosilanes de formule $(R'')_xX_{(3-x)}Si(CH_2)_m$-R', avec
R = alkyle, de préférence méthyle, éthyle ou propyle,
R' = $-NH_2$, $-NH-CH_2-CH_2-NH_2$, $-N-(CH_2-CH_2-NH_2)_2$, $-NH-CO-N-CO-(CH_2)_5$, $-NH-COO-CH_3$, $-NH-COO-CH_2-CH_3$, $-NH-(CH_2)_3Si(OR)_3$, $- NH-(CH_2)_3-CH_3$ ou $-NH-CH_2-CH_2-NH-CH_2-CH_2-NH_2$,
R'' = alkyle, cycloalkyle,
X = Cl ou Br,
x =1 ou 2,
m = 0, 1 à 20.

**7.** Procédé selon la revendication 6, **caractérisé en ce qu'**un gâteau de filtration contenant de l'eau ayant une perte au séchage de 30 à 80 % en poids est utilisé en tant que matériau de départ pour l'étape a).

**8.** Procédé selon la revendication 6, **caractérisé en ce que** la silice à l'étape c) est compactée et granulée dans des mélangeurs intensifs rapides.

**9.** Procédé de fabrication de silices fonctionnalisées granulaires selon les revendications 1 à 5, comprenant les étapes suivantes:

i) la préparation d'une silice précipitée ou pyrogénée ayant une perte au séchage < 30 % en poids, et ayant une taille de particule moyenne $d_{50}$ sans traitement aux ultrasons de 0,1 à 350 $\mu$m,
ii) le façonnage de la silice de l'étape i) par compactage à sec, de préférence entre deux cylindres rotatifs, à une pression de compression spécifique de 0,5 kN/cm de largeur de cylindre à 12 kN/cm de largeur de cylindre en éléments emboutis,
iii) la granulation avec tamisage ou le tamisage des éléments emboutis à une taille de tamisage de 3 000 $\mu$m

et l'élimination par tamisage de la fraction de fines avec une largeur de mailles de tamis de 400 µm et

iv) la mise en réaction des granulats de l'étape iii) avec un agent de modification de surface, au moins un des organosilanes suivants ou des mélanges des organosilanes étant utilisés en tant qu'agent de modification de surface :

a) les organosilanes de formule $(RO)_3Si(CH_2)_m$-R',

b) les organosilanes de formule $(R'')_x(RO)_{(3-x)}Si(CH_2)_m$-R',

c) les halogéno-organosilanes de formule $X_3Si(CH_2)_m$-R' ou

d) les halogéno-organosilanes de formule $(R'')_xX_{(3-x)}Si(CH_2)_m$-R', avec

R = alkyle, de préférence méthyle, éthyle ou propyle,

R' = $-NH_2$, $-NH-CH_2-CH_2-NH_2$, $-N-(CH_2-CH_2-NH_2)_2$, $-NH-CO-N-CO-(CH_2)_5$, $-NH-COO-CH_3$, $-NH-COO-CH_2-CH_3$, $-NH-(CH_2)_3Si(OR)_3$, $-NH-(CH_2)_3-CH_3$ ou $-NH-CH_2-CH_2-NH-CH_2-CH_2-NH_2$, R'' = alkyle, cycloalkyle,

X = Cl ou Br,

x = 1 ou 2,

m = 0, 1 à 20.

**10.** Procédé selon l'une quelconque des revendications 6 à 9, **caractérisé en ce que** toutes les fractions de tamisage inférieures à 400 µm sont séparées.

**11.** Procédé selon l'une quelconque des revendications 6 ou 9, **caractérisé en ce que** les étapes de façonnage c) et ii) sont réalisées sans l'introduction de liants.

**12.** Utilisation des silices granulaires selon l'une quelconque des revendications 1 à 5 pour la fabrication de formulations.

**13.** Formulation, contenant au moins une des silices granulaires selon l'une quelconque des revendications 1 à 5 et un additif.

**14.** Formulation selon la revendication 13, **caractérisée en ce qu'**au moins une substance catalytiquement active est utilisée en tant qu'additif.

**15.** Formulation selon l'une quelconque des revendications 13 ou 14, **caractérisée en ce que** la formulation contient l'additif en proportions comprises entre 1 et 70 % en poids.

**16.** Formulation selon la revendication 13, **caractérisée en ce que** des agents de durcissement ou des initiateurs, des agents de réticulation, des catalyseurs, des agents actifs et des adjuvants pharmaceutiques, des agents actifs et des adjuvants cosmétiques, des agents de nettoyage et/ou de soin, des agents aromatisants, des arômes et des parfums, des aliments pour animaux ou des additifs d'aliments pour animaux, des vitamines, des minéraux, des produits alimentaires ou des additifs de produits alimentaires, des colorants et/ou des pigments, des acides aminés, des oxydants ou des agents blanchissants, des additifs microbicides, des produits chimiques pour l'agriculture et la foresterie et/ou des additifs pour béton sont utilisés en tant qu'additif.

**17.** Formulation selon la revendication 16, **caractérisée en ce que** l'additif est une enzyme.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011117100 A
- DE 102006002765
- EP 0984772 A1
- EP 0966207 A1
- DE 10163179 A1
- EP 1700824 A1
- EP 0725037 A1
- EP 1357156 A2
- US 20060084746 A
- DE 102008035867 A1
- EP 0937755 A1